# EUROPEAN PATENT APPLICATION

(11) **EP 4 474 952 A1**
(43) Date of publication of application: **11.12.2024**
(21) Application number: 23924465.0
(22) Date of filing: 28.11.2023
(51) Int. Cl.: G06F 3/01

(54) **AIR GESTURE RECOGNITION METHOD, ELECTRONIC DEVICE, AND STORAGE MEDIUM**

(30) Priority: 27.02.2023 CN 202310227031
(71) Applicant: Honor Device Co., Ltd., Shenzhen, Guangdong 518040 (CN)
(72) Inventor: GUAN, Yifan, Shenzhen, Guangdong 518040 (CN)
(74) Representative: Isarpatent
(86) International application number: PCT/CN2023/134794
(87) International publication number: WO 2024/179084

(57) **Abstract**

This application provides an air gesture recognition method, an electronic device, and a storage medium, and relates to the field of image processing technologies. An electronic device camera enables an AON function, and a front camera collects images in real time. First, a plurality of consecutive frames of images with a relatively low resolution are output, and a low-power TCM memory is used for data caching, to perform first-phase detection. When it is detected that a preset gesture trigger condition is met, a plurality of consecutive frames of images with a relatively high resolution are output, and the low-power TCM memory and a normal-power DDR memory are used, to perform second-phase specific gesture recognition. After a specific gesture is identified, a response is made based on a preset policy corresponding to a gesture recognition result. In this application, gesture detection is performed in phases. In different phases, different image resolutions are applied, and a running memory is switched. Therefore, in the solution of this application, not only accuracy of gesture recognition can be ensured, but also power consumption and memory space required in a gesture recognition process can be effectively reduced.

## Description

This application claims priority to Chinese Patent Application No. 202310227031.X, filed with the China National Intellectual Property Administration on February 27, 2023 and entitled "AIR GESTURE RECOGNITION METHOD, ELECTRONIC DEVICE, AND STORAGE MEDIUM", which is incorporated herein by reference in its entirety.

### TECHNICAL FIELD

This application relates to the field of image technologies, and in particular, to an air gesture recognition method, an electronic device, and a storage medium.

### BACKGROUND

Currently, an always-on camera (always-on camera, AON) function may be applied to a smart electronic device such as a mobile phone, to implement a function such as controlling a screen by using an air gesture. Specifically, in a case in which the AON function is applied to the mobile phone, a front camera in a mobile phone camera is in an always-on state, and may collect an image in real time. The mobile phone performs gesture recognition through image analysis, and may control the screen in response to a user gesture, so that the screen of the mobile phone can be controlled without touching the mobile phone by a user.

For example, the electronic device may identify various gesture actions of the user, for example, changing a palm extension state to a fist clenching state (a grab gesture), which indicates that screenshot processing is performed on a display interface of the electronic device. When identifying the grab gesture, the electronic device automatically performs a screenshot operation, and the user can complete human-computer interaction without touching the electronic device, greatly improving operation convenience.

Currently, in a case in which a gesture recognition function is enabled on the electronic device, the electronic device continuously collects a plurality of consecutive frames of images by using a camera, and also needs to continuously analyze the images to perform gesture recognition. In this case, a data amount is very large. It may be learned that because detection is frequently performed in a gesture recognition process, a large amount of data needs to be processed, resulting in relatively high power consumption.

### SUMMARY

This application provides an air gesture recognition method, an electronic device, and a storage medium, to resolve a problem that a large amount of data needs to be processed and power consumption is relatively high because detection is frequently performed in a gesture recognition process.

To achieve the foregoing objective, the following technical solutions are used in this application:
According to a first aspect, this application provides an air gesture recognition method. The method includes: An electronic device enables an air gesture function, where after the air gesture function is enabled, a camera module of the electronic device is in an always-on state; outputs a plurality of frames of first images of a first size specification by using the camera module, and stores the plurality of frames of first images in a first internal memory; when an analysis result of the plurality of frames of first images meets a preset gesture trigger condition, outputs a plurality of frames of second images of a second size specification by using the camera module, and stores the plurality of frames of second images in the first internal memory and a second internal memory; performs gesture recognition based on the plurality of frames of second images, to obtain a gesture recognition result; and responds based on a preset policy corresponding to the gesture recognition result, where a resolution corresponding to the first size specification is lower than a resolution corresponding to the second size specification; and in a case in which a same image is stored, power consumption caused by the first internal memory is lower than power consumption caused by the second internal memory, and power consumption caused by the first internal memory and the second internal memory together is lower than the power consumption caused by the second internal memory.

According to the air gesture recognition method provided in this embodiment of this application, an electronic device camera enables the air gesture function, and a front camera collects images in real time. First, a plurality of consecutive frames of images with a relatively low resolution are output, and a low-power memory (for example, a TCM) is used for data caching, to perform first-phase detection. When it is detected that the preset gesture trigger condition is met, a plurality of consecutive frames of images with a relatively high resolution are output, and the low-power memory and a normal-power memory (for example, a DDR memory) are used, to perform second-phase specific gesture recognition. After a specific gesture is identified, a response is made based on a preset policy corresponding to a gesture recognition result. In this application, gesture detection is performed in phases. In different phases, different image resolutions are applied, and a running memory is switched. Therefore, in the solution of this application, not only accuracy of gesture recognition can be ensured, but also power consumption and memory space required in a gesture recognition process can be effectively reduced.

It should be noted that when the camera module of the electronic device is in an always-on state, the camera module collects a user gesture operation image to obtain an image frame stream. The camera module may output image frame streams of different resolutions based on a requirement. The preset gesture trigger condition includes that there is a hand feature and a start gesture in the plurality of frames of first images.

In some implementations, the foregoing method further includes: determining that the analysis result of the plurality of frames of first images meets the preset gesture trigger condition; and the determining that the analysis result of the plurality of frames of first images meets the preset gesture trigger condition includes: obtaining N consecutive frames of images from the plurality of frames of first images based on a preset first sampling period, to analyze whether there is a hand feature in the plurality of frames of first images; after it is determined that there is the hand feature in the plurality of frames of first images, obtaining M consecutive frames of images from the plurality of frames of first images based on a preset second sampling period, to analyze whether there is a start gesture in the plurality of frames of first images; and if it is determined, for S consecutive times, that there is the start gesture in the plurality of frames of first images and a status of the start gesture changes, determining that the analysis result of the plurality of frames of first images meets the preset gesture trigger condition.

In the foregoing solution, a specific gesture trigger condition is used for determining, so that an image that has a user gesture feature can be accurately selected, to further identify the specific gesture based on the image, thereby improving gesture recognition accuracy.

In some implementations, the performing gesture recognition based on the plurality of frames of second images, to obtain a gesture recognition result includes: obtaining T consecutive frames of images from the plurality of frames of second images based on a preset third sampling period, to identify a specific gesture in the plurality of frames of first images; identifying the specific gesture within preset duration; and when it is determined that the specific gesture is one of a plurality of preset gestures, generating the gesture recognition result based on the specific gesture.

In some implementations, the responding based on a preset policy corresponding to the gesture recognition result includes:
when the gesture recognition result is a first gesture and a corresponding first preset policy is grabshot, taking a screenshot of screen display content of the electronic device based on the first preset policy;
when the gesture recognition result is a second gesture and a corresponding second preset policy is air scroll, turning a page of screen display content of the electronic device based on the second preset policy;
when the gesture recognition result is a third gesture and a corresponding third preset policy is air answer calls, and when the electronic device receives an incoming call signal, automatically answering an incoming call based on the third preset policy; or
when the gesture recognition result is a fourth gesture and a corresponding fourth preset policy is air pay, and when a home screen is displayed on a screen of the electronic device, automatically jumping from the home screen to an interface including a payment code based on the fourth preset policy.

According to the foregoing solution, the gesture recognition result is one of the plurality of preset gestures, and different gestures correspond to different preset policies. After the electronic device accurately identifies the specific gesture, the electronic device infers a user intention to control the device based on the specific gesture, and performs a corresponding action, so that interaction experience can be improved.

In some implementations, the first internal memory is a tightly coupled memory TCM and the second internal memory is a double data rate DDR synchronous dynamic random access memory.

In some implementations, the second size specification is QVGA, and a corresponding resolution is 320×240; and the first size specification is QQVGA, and a corresponding resolution is 160×120. This may be specifically determined based on an actual use requirement, and is not limited in this embodiment of this application.

In some implementations, the camera module is a front camera.

In some implementations, the method is applied to a system framework of the electronic device, and the system framework includes a first algorithm platform and a second algorithm platform; and the second algorithm platform is a framework that is provided by a native chip and that supports an always-on camera AON algorithm; the first algorithm platform is an AON algorithm integration framework that supports a plurality of services and that is created based on the second algorithm platform; a service supported by the first algorithm platform for processing includes an air gesture service; and a service supported by the second algorithm platform for processing includes a face unlock screen service.

In some implementations, the method further includes: analyzing the plurality of frames of first images by using the first algorithm platform; and determining, by using the first algorithm platform, whether the analysis result of the plurality of frames of first images meets the preset gesture trigger condition.

In some implementations, the performing gesture recognition based on the plurality of frames of second images, to obtain a gesture recognition result includes: performing the gesture recognition based on the plurality of frames of second images by using the first algorithm platform, to obtain the gesture recognition result.

In some implementations, the system framework further includes a smart sensing application;
that an electronic device enables an air gesture function includes: The smart sensing application receives a first operation of enabling the air gesture service by a user, where the air gesture service is a service supported by the smart sensing application; the smart sensing application delivers a first message to the first algorithm platform in response to the first operation, where the first message is used to indicate to subscribe to the air gesture service; and the first algorithm platform subscribes to the air gesture service in response to the first message.

In some implementations, after the subscribing to the air gesture service, the method further includes: The first algorithm platform sends a second message to the camera module, where the second message is used to request the camera module to output an image based on the first size specification.

In some implementations, the method further includes: After the first algorithm platform determines that the analysis result of the plurality of frames of first images meets the preset gesture trigger condition, the first algorithm platform sends a third message to the camera module, where the third message is used to request the camera module to output an image based on the second size specification.

In some implementations, the method further includes: After the first algorithm platform determines that the analysis result of the plurality of frames of first images meets the preset gesture trigger condition, the first algorithm platform reports a fourth message to the smart sensing application, where the fourth message is used to indicate that a first service supported by the smart sensing application is triggered; and the smart sensing application triggers, in response to the fourth message, the electronic device to display prompt information of the first service in a preset area of the screen.

In some implementations, the prompt information of the first service includes a gesture animation, and the gesture animation includes the plurality of frames of first images and the plurality of frames of second images.

In some implementations, before the responding based on a preset policy corresponding to the gesture recognition result, the method further includes: The first algorithm platform reports the gesture recognition result to the smart sensing application; and
the responding based on a preset policy corresponding to the gesture recognition result includes: The smart sensing application responds based on the preset policy corresponding to the gesture recognition result.

In some implementations, the system framework further includes a smart sensing interface; and data exchange is performed between the smart sensing application and the first algorithm platform by using the smart sensing interface.

In some implementations, the system framework further includes a service management module, a dispatcher, a smart sensing client, and a native platform client; and
the method further includes: When the analysis result of the plurality of frames of first images meets the preset gesture trigger condition, the service management module determines a processing task of the air gesture service, and sends the processing task of the air gesture service to the smart sensing client by using the dispatcher, and the smart sensing client forwards the processing task of the air gesture service to the first algorithm platform.

In some implementations, the system framework further includes an algorithm library, where the algorithm library includes a first image processing algorithm and a second image processing algorithm; and
the analyzing the plurality of frames of first images by using the first algorithm platform includes: The first algorithm platform invokes the first image processing algorithm in the algorithm library to perform image analysis on the plurality of frames of first images; and
the performing gesture recognition based on the plurality of frames of second images includes: The first algorithm platform invokes the second image processing algorithm in the algorithm library to perform image analysis on the plurality of frames of second images, where
a requirement of the first image processing algorithm on an image resolution is lower than a requirement of the second image processing algorithm on an image resolution.

According to a second aspect, this application provides an image processing apparatus. The apparatus includes a unit configured to perform the method in the first aspect. The apparatus may correspondingly perform the method described in the first aspect. For related description of the unit in the apparatus, refer to the description in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, a processing module or unit or a display module or unit.

According to a third aspect, this application provides an electronic device. The electronic device includes a processor, and a computer program or instructions stored in the processor and a memory. The processor is configured to execute the computer program or the instructions, to enable the method in the first aspect to be performed.

According to a fourth aspect, this application provides a computer-readable storage medium. The computer-readable storage medium stores a computer program (which may also be referred to as instructions or code) used to implement the method in the first aspect. For example, when the computer program is executed by a computer, the computer is enabled to perform the method in the first aspect.

According to a fifth aspect, this application provides a chip, including a processor. The processor is configured to read and execute a computer program stored in a memory, to perform the method in any one of the first aspect and the possible implementations of the first aspect. Optionally, the chip further includes a memory, and the memory is connected to the processor by using a circuit or a wire.

According to a sixth aspect, this application provides a chip system, including a processor. The processor is configured to read and execute a computer program stored in a memory, to perform the method in any one of the first aspect and the possible implementations of the first aspect. Optionally, the chip system further includes a memory, and the memory is connected to the processor by using a circuit or a wire.

According to a seventh aspect, this application provides a computer program product. The computer program product includes a computer program (which may also be referred to as instructions or code), and when the computer program is executed by an electronic device, the electronic device is enabled to implement the method in the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1A and FIG. 1B are a schematic diagram of an application scenario of AON camera according to an embodiment of this application;
FIG. 2 is a schematic diagram of an air gesture recognition method according to a related technology;
FIG. 3 is a schematic diagram of an air gesture recognition method according to an embodiment of this application;
FIG. 4 is a schematic diagram of a structure of an electronic device according to an embodiment of this application;
FIG. 5 is a schematic diagram of a software architecture according to an embodiment of this application;
FIG. 6A to FIG. 6C are a time sequence diagram of interaction between modules in a software architecture according to an embodiment of this application;
FIG. 7 is a schematic flowchart of an air gesture recognition method according to an embodiment of this application;
FIG. 8 is a schematic diagram of a software architecture applied to an air gesture recognition method according to an embodiment of this application;
FIG. 9A and FIG. 9B are a time sequence diagram of interaction between modules in an air gesture recognition method according to an embodiment of this application;
FIG. 10A to FIG. 10D are a schematic diagram of function setting of an air gesture recognition method according to an embodiment of this application;
FIG. 11 is a schematic diagram of an interface when an air gesture recognition method according to an embodiment of this application is applied;
FIG. 12 is a first schematic flowchart of an air gesture recognition method according to an embodiment of this application;
FIG. 13A and FIG. 13B are a second schematic flowchart of an air gesture recognition method according to an embodiment of this application;
FIG. 14A to FIG. 14C are a schematic diagram of an interface of a grabshot scenario applied in an embodiment of this application;
FIG. 15A and FIG. 15B are a schematic diagram of an interface of an air scroll scenario applied in an embodiment of this application;
FIG. 16A to FIG. 16C are a schematic diagram of an interface of an air press-call answering scenario applied in an embodiment of this application; and
FIG. 17A to FIG. 17C are a schematic diagram of an interface of an air press-smart pay scenario applied in an embodiment of this application.

### DESCRIPTION OF EMBODIMENTS

To make the objectives, technical solutions, and advantages of embodiments of this application clearer, the following clearly and describes the technical solutions in embodiments of this application with reference to the accompanying drawings in embodiments of this application. Clearly, the described embodiments are some rather than all of embodiments of this application. Based on embodiments of this application, all other embodiments obtained by a person of ordinary skill in the art without creative efforts fall within the protection scope of this application.

In this specification, the term "and/or" is an association relationship that describes associated objects, and indicates that three relationships may exist. For example, "A and/or B" may indicate the following three cases: only A exists, both A and B exist, and only B exists. The character "/" in this specification indicates an "or" relationship between associated objects. For example, "A/B" indicates A or B.

The terms "first", "second", and the like in the specification and the claims in this specification are used to distinguish between different objects, and are not used to describe a specific sequence of the objects. In the description of embodiments of this application, unless otherwise stated, "a plurality of" means two or more. For example, "a plurality of processing units" means two or more processing units, and "a plurality of elements" means two or more elements.

In embodiments of this application, words such as "example" or "for example" are used to represent giving an example, an illustration, or a description. Any embodiment or design solution described as "example" or "for example" in embodiments of this application should not be construed as being more preferred or advantageous than other embodiments or design solutions. Exactly, the words such as "example" or "for example" are intended to present related concepts in a specific manner.

Currently, an AON function may be applied to a smart electronic device such as a mobile phone. The AON function allows a camera apparatus (a front camera) of the electronic device to be always in an active state, so that the camera can be always on at low power consumption, and functions such as code scanning, controlling a screen by using an air gesture, and smart always on display (always on display, AOD) can be more quickly completed.

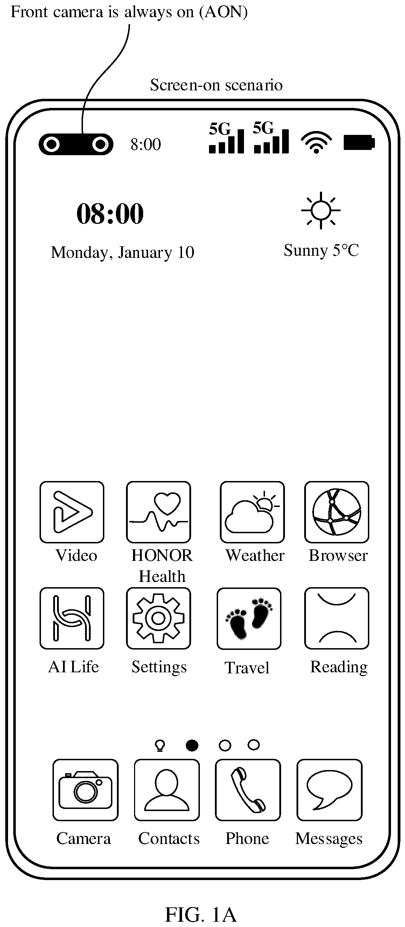

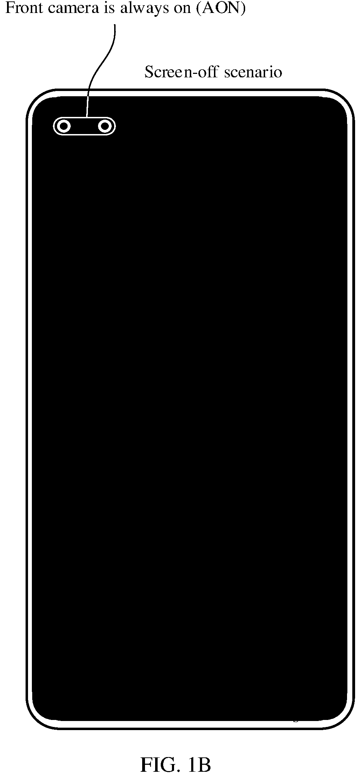

FIG. 1A and FIG. 1B are a schematic diagram of an application scenario of an AON function. As shown in FIG. 1A, the mobile phone is in a screen-on state, and the front camera of the mobile phone is always on, and collects an image in real time. As shown in FIG. 1B, the mobile phone is in a screen-off state, and the front camera of the mobile phone is always on, and collects an image in real time. It should be noted that controlling the screen by using the air gesture is implemented in a screen-on scenario, and the smart AOD is implemented in a screen-off scenario.

In a case in which the AON function is applied to the mobile phone, the front camera in a mobile phone camera is in an always-on state, and may collect an image in real time. The mobile phone performs gesture recognition through image analysis, and may control the screen in response to a user gesture, so that the screen of the mobile phone can be controlled without touching the mobile phone by a user. In a case in which a gesture recognition function is enabled on the electronic device, the electronic device continuously collects a plurality of consecutive frames of images by using the front camera, and also needs to continuously analyze the images to perform gesture recognition. In this case, a data amount is very large. It may be learned that because detection is frequently performed in a gesture recognition process, a large amount of data needs to be processed, resulting in relatively high power consumption.

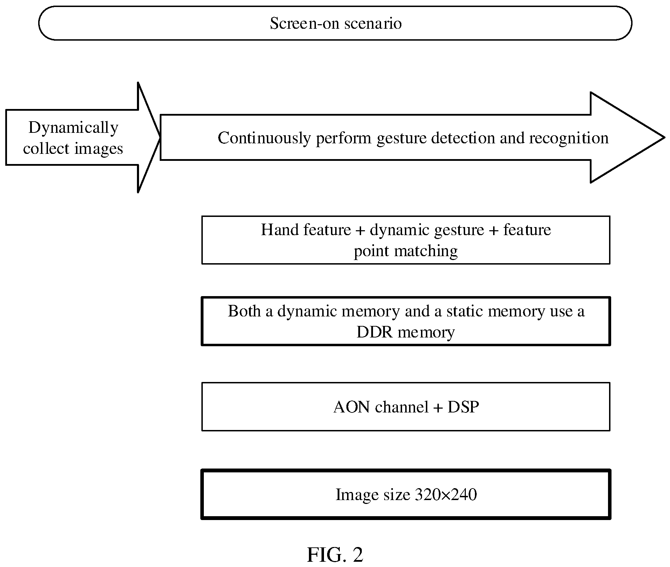

For example, FIG. 2 is a schematic diagram of a gesture recognition process in a related technology. As shown in FIG. 2, in the screen-on scenario, the front camera dynamically collects images, and continuously performs gesture detection and recognition based on a plurality of consecutive frames of collected images. The gesture recognition process has the following features:
(1) The gesture recognition process includes processes such as hand feature detection, dynamic gesture recognition, and feature point matching.
(2) In the gesture recognition process, both a dynamic memory and a static memory use a DDR memory. The DDR memory is an internal memory with a high data transmission rate and very large storage space. For details, refer to the following description.
(3) A channel and a processing device included in the gesture recognition process include a channel for implementing the AON function and a digital signal processor (digital signal processor, DSP).
(4) In the gesture recognition process, a relatively large-sized image is used, for example, 320×240 pixels or 640×480 pixels.

It may be learned that during gesture recognition in the related technology, after collecting an image, a camera system outputs the image to a smart sensing algorithm platform at a relatively high resolution regardless of whether there is a gesture feature in the image. In this manner, gesture recognition needs to be performed on a large quantity of images that include the gesture and do not include the gesture feature. In addition, an image resolution is fixed and relatively high. In this case, a large quantity of image processing resources are invoked in an image analysis aspect, and memory occupation is also large in terms of image storage. Consequently, power consumption is very high and memory occupation is relatively large in the gesture recognition process in the related technology. That is, in the foregoing gesture recognition process, because detection is frequently performed in the gesture recognition process, a data amount is very large, resulting in relatively high power consumption.

In view of this, embodiments of this application provide an air gesture recognition method and an electronic device. Through improvement at a system bottom layer of the electronic device, an honor intelligent always on camera (honor intelligent always on camera, smart sensing) algorithm platform (also referred to as a smart sensing algorithm integration framework) is newly constructed based on a native chip platform, and can support a sensing detection algorithm in a low-power domain. By using the sensing detection algorithm, power consumption can be greatly reduced while ensuring accurate gesture recognition, to improve user experience.

To better understand the embodiments of this application, the following briefly describes the embodiments of this application.

In this application, a smart sensing 1.0 algorithm integration framework is newly constructed based on the native chip platform, and a self-owned AON service is established. A platform software infrastructure supports development of a gesture recognition feature of a mobile phone product, so that the sensing detection algorithm in the low-power domain can be supported. Specific content of the smart sensing algorithm integration framework is to be described below.

In an application scenario of this application, an AON camera (the front camera) of the electronic device may be used to collect an image. The electronic device performs gesture recognition on the image by using the sensing detection algorithm supported by the smart sensing algorithm platform, to implement smart sensing. Specifically, after sensing that the AON camera (the front camera) collects the image, the electronic device first outputs the image to the smart sensing algorithm platform at a relatively low resolution for image analysis to determine whether there is a gesture feature in the image; when it is determined that there is the gesture feature in the image, then outputs the image to the smart sensing algorithm platform at a relatively high resolution for image analysis; identifies a specific gesture in the image; and reports a recognition result to a smart sensing application. The smart sensing application responds based on a preset policy corresponding to the identified specific gesture.

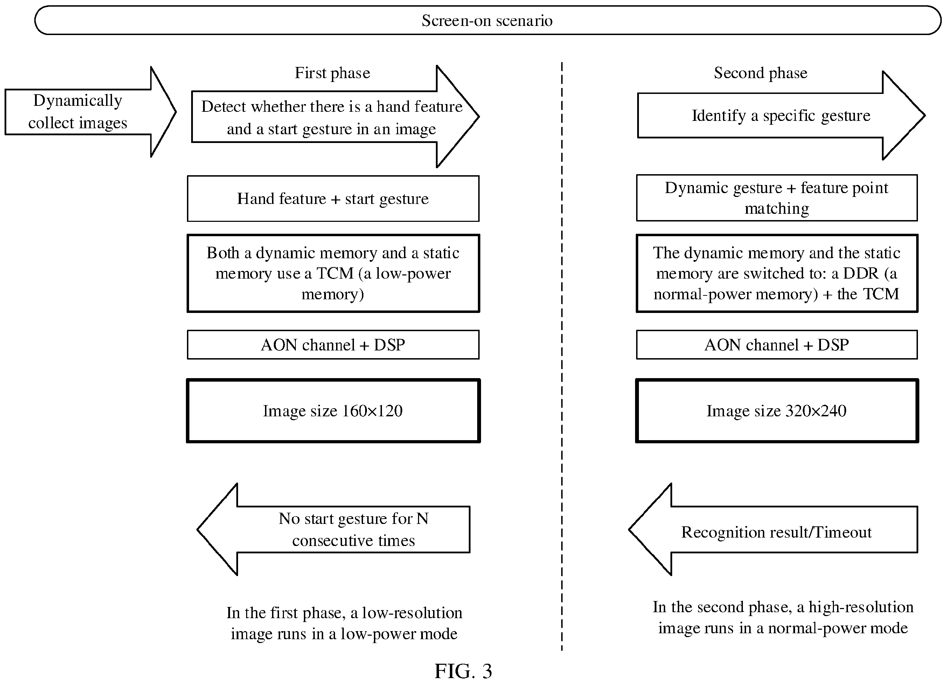

Referring to FIG. 3, in this embodiment of this application, a gesture recognition process includes the following two phases:
First phase: In a gesture sensing phase, it is first detected whether there is a gesture feature and a start gesture in an image.

It is undetermined whether there is a gesture feature in a collected image. A large quantity of images have no gesture feature, and only a small quantity of images include the gesture feature. Therefore, an image with the gesture feature needs to be preliminarily selected in the first phase. In this case, it is unnecessary for a camera system to collect an image at a high resolution for outputting to the smart sensing algorithm platform. Correspondingly, it is unnecessary for the smart sensing algorithm platform to perform image analysis on a high-resolution image in the first phase.

Therefore, it is proposed in this embodiment of this application that, in the first phase, it is first determined whether there is the gesture feature in the image. If there is the gesture feature, the start gesture is further determined. To avoid unnecessary power consumption, the camera system may output the image to the smart sensing algorithm platform at a low resolution. Correspondingly, the smart sensing algorithm platform may perform image analysis on the low-resolution image, so that unnecessary power consumption can be reduced.

If it is determined in the first phase that there is the gesture feature and the start gesture in the image, a second phase continues to be performed. If it is determined in the first phase that there is no gesture feature in the image, the second phase is not performed, and the image is discarded. Therefore, power consumption can be greatly reduced, and memory occupation can be reduced.

Second phase: In a specific gesture recognition phase, when it is determined that there is the gesture feature and the start gesture in the image, the image is output to the smart sensing algorithm platform at a relatively high resolution. Image analysis is performed by using the sensing detection algorithm supported by the smart sensing algorithm platform. A specific gesture in the image is identified, and a recognition result is reported to the smart sensing application. The smart sensing application responds based on a preset policy corresponding to the identified specific gesture.

For example, if the recognition result is an air scroll gesture, the electronic device controls screen display content to page up or down. For another example, if the recognition result is a grab gesture, the electronic device controls to take a screenshot of a current display interface.

It may be understood that, when it is determined in the first phase that there is the gesture feature in the image, because the specific gesture in the image needs to be analyzed, for example, gesture recognition needs to be performed through image feature point matching, in the second phase, the image needs to be output to the smart sensing algorithm platform at the relatively high resolution. The specific gesture is accurately identified by using the smart sensing algorithm platform. Therefore, in the solution of this application, not only accuracy of the gesture recognition can be ensured, but also power consumption and memory space required in a gesture recognition process can be effectively reduced.

As shown in FIG. 3, the first phase has the following features:
(1) The first phase includes processes such as hand feature detection and start gesture recognition.
(2) In the first phase, both a dynamic memory and a static memory use a TCM memory. The TCM memory is a low-power internal memory with relatively small storage space. For details, refer to the following description.
(3) In the first phase, an included channel and an included processing device include a channel and a DSP that implement an AON function.
(4) In the first phase, a relatively small-sized image is used, for example, 160×120 pixels.

In the first phase, if no start gesture is detected for N consecutive times, it is considered that the collected image is an invalid frame, the invalid frame is discarded, and then the first phase continues to be performed again. If it is detected that there is the hand feature and the start gesture in the image, the second phase continues to be performed.

As shown in FIG. 3, the second phase has the following features:
(1) The second phase includes processes such as dynamic gesture recognition and feature point matching.
(2) In the second phase, a dynamic memory and a static memory are switched to a DDR memory + a TCM memory.
(3) In the second phase, an included channel and an included processing device include a channel and a DSP that implement the AON function.
(4) In the second phase, a relatively large-sized image is used, for example, 320×240 pixels.

In the second phase, after the specific gesture is identified, the recognition result is reported to the smart sensing application, and the smart sensing application responds based on the preset policy corresponding to the identified specific gesture. If duration used to identify the gesture times out, an invalid frame is discarded, and the first phase continues to be performed again.

With reference to FIG. 2 and FIG. 3, the solution of this application has the following beneficial effects compared with the related technology:

In one aspect, the gesture recognition is performed in phases. First, it is determined whether there is the gesture feature and the start gesture in the image. Then, the specific gesture in the image is identified when it is determined that there is the gesture feature and the start gesture in the image. For an image including no gesture feature, it is unnecessary to perform specific gesture recognition. Therefore, a valid gesture is selected in phases, reducing unnecessary image analysis and memory occupation.

In another aspect, in different phases, the camera system outputs the collected image to the smart sensing algorithm platform at different resolutions. Correspondingly, the smart sensing algorithm platform performs the gesture recognition on the image with the different resolutions. In the first phase, the relatively low-resolution image is used when it is determined whether there is the gesture feature in the image. In the second phase, the relatively high-resolution image is used when the specific gesture is identified. Therefore, continuous high-power gesture recognition can be avoided, power consumption can be reduced, and memory occupation can be reduced.

According to the solution of this application, the AON camera runs at extremely low power consumption, and the electronic device can accurately identify an air interaction gesture of the user, determine a user intention to control the device, and quickly complete device control. For example, the electronic device automatically performs a screenshot operation when identifying the grab gesture, or automatically performs an upward or downward screen sliding operation when identifying the scroll gesture. In this way, the user can complete human-computer interaction without touching the electronic device, greatly improving operation convenience.

The air gesture recognition method provided in this embodiment of this application may be applied to an electronic device having a photographing function. The electronic device includes various terminal devices, and the terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

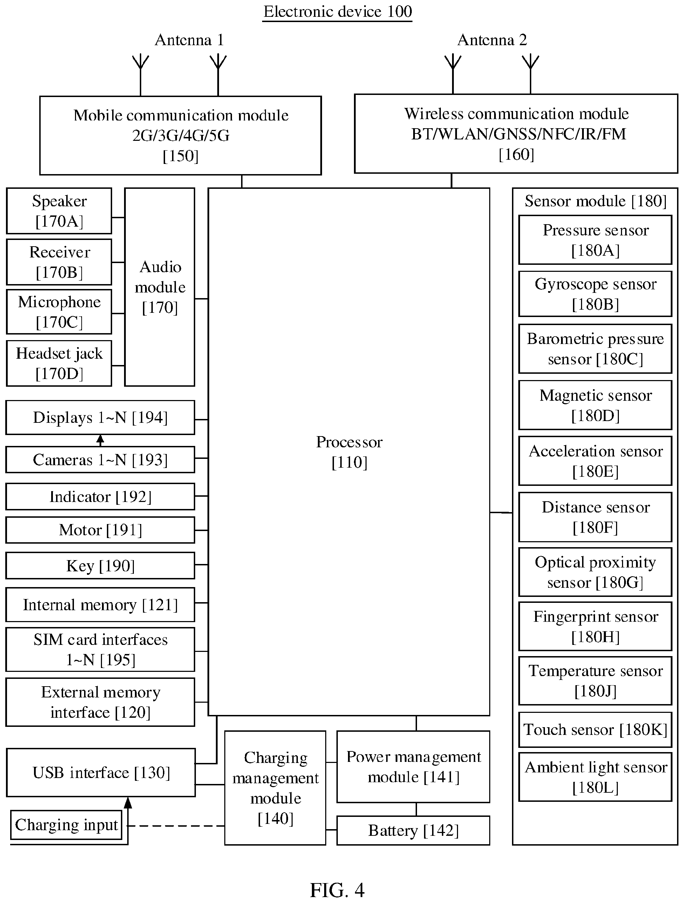

FIG. 4 is a schematic diagram of a structure of an electronic device according to an embodiment of this application. An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

It may be understood that the structure shown in this embodiment of this application constitutes no specific limitation on the electronic device 100. In some other embodiments of this application, the electronic device 100 may include more or fewer components than those shown in the figure, some components may be combined, some components may be split, or components may be arranged in different manners. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a DSP, a baseband processor, a neural-network processing unit (neural-network processing unit, NPU), and/or the like. Different processing units may be independent components, or may be integrated into one or more processors. For example, the processor 110 is configured to perform the air gesture recognition method in embodiments of this application.

In this embodiment of this application, implementation of an AON function depends on the ISP. The ISP can run various algorithm programs to process image signals in real time. A camera module is connected to the ISP by using a camera serial interface (camera serial interface, CSI), and the ISP is connected to the AP. After the ISP receives an image collected by the camera module, the ISP performs image signal processing on the image collected by the camera module. The AP may control an operating mode of the ISP by using an inter-integrated circuit (inter-integrated circuit, I2C), and obtain a working status and the like of the ISP.

The controller may be a nerve center and a command center of the electronic device 100. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

The external memory 120 is usually an external memory. In this embodiment of this application, the external memory is a memory other than the memory of the electronic device and a cache of a processor, and the memory is usually a nonvolatile memory.

The internal memory 121 may also be referred to as a "memory", and may be configured to store computer-executable program code, and the executable program code includes instructions. The internal memory 121 may include a program storage area and a data storage area. The program storage area may store an operating system, an application required by at least one function (for example, a sound playback function or an image playback function), and the like.

In this embodiment of this application, the memory of the electronic device uses a tightly coupled memory (tightly coupled memory, TCM) and a DDR memory.

The DDR memory is a double data rate synchronous dynamic random access memory, and the full name of the DDR memory is DDR SDRAM (double data rate SDRAM, double data rate SDRAM). SDRAM is an acronym of synchronous dynamic random access memory (synchronous dynamic random access memory). The DDR memory has a very high data transmission rate.

The TCM is included in address mapping space of the memory and may be accessed as a fast memory. The TCM is used to provide a low-latency memory to the processor, and has no cache-specific unpredictability. The TCM may be used to store an important routine, for example, an interrupt handling routine or a real-time task in which it is critical to avoid cache uncertainty. In addition, the TCM may be used to store temporary register data, a data type whose local attribute is not suitable for the cache, and an important data structure such as an interrupt stack.

It should be noted that, from a storage capacity perspective, a capacity of the TCM memory is relatively small, and a capacity of the DDR memory is relatively large. From a data transmission rate perspective, a data transmission rate of the DDR memory is greater than a data transmission rate of the TCM memory. From a power consumption perspective, power consumption of the DDR memory is greater than power consumption of the TCM memory. The electronic device usually uses the DDR memory, and therefore has relatively high power consumption. In this embodiment of this application, the TCM memory is used for data caching in some scenarios, which can reduce power consumption.

For example, in this embodiment of this application, in some early-stage scenarios for pre-sensing a service, both a dynamic memory and a static memory in the electronic device use the TCM memory, to store a plurality of consecutive frames of images collected by a front AON camera (a front camera). These images are images of a QQVGA image specification. The QQVGA image specification is a relatively small image size, for example, 160×120, which may be denoted as a QQVGA (160×120) image size. It may be understood that an image resolution of the QQVGA image specification is relatively low, and the image occupies a relatively small memory.

For example, in some later-stage scenarios for identifying a specific service, a dynamic memory and a static memory of the electronic device use the DDR memory and the TCM memory in combination, to jointly store a plurality of consecutive frames of images collected by the AON camera (the front camera). These images are the plurality of consecutive frames of images of a QVGA image specification. Compared with the QQVGA image specification, the QVGA image specification is a relatively large image size, for example, 320×240, which may be denoted as a QVGA (320×240) image size. It may be understood that, in comparison with the QQVGA image specification, an image resolution of the QVGA image specification is relatively high, and the image occupies a relatively large memory.

VGA (video graphics array) stands for a video graphics array, and a corresponding resolution is 640×480 pixels. QVGA refers to a 1/4 size of the VGA resolution, and a corresponding resolution is 320×240 pixels. QQVGA refers to a 1/4 screen of the VGA resolution, and a corresponding resolution is 160×120 pixels.

It may be understood that a resolution corresponding to the image of the QQVGA specification is the lowest, and an occupied memory is also the smallest.

In this embodiment of this application, in a first phase, in one aspect, the AON camera (the front camera) collects a relatively small-sized image of the QQVGA specification, and stores the relatively small-sized image in the TCM memory, so that extremely small memory space is occupied. In another aspect, the processor analyzes the plurality of consecutive frames of images to determine whether a user triggers a service. For example, if it is detected, through image analysis, that there is a hand feature and a start gesture changes, the processor may determine that the user triggers an air gesture service. For another example, if it is detected, through image analysis, that there is a face feature and a screen direction of the electronic device is deflected, it may be determined that the user triggers a "smart rotate" service.

In a second phase, in one aspect, the AON camera (the front camera) collects a relatively large-sized image of the QVGA specification, and stores the relatively large-sized image in the DDR memory and the TCM memory. In another aspect, the processor analyzes the plurality of consecutive frames of images to identify specific content of a triggered service. For example, if it is detected, through image analysis, that a palm changes from an open state to a grab state, the processor may identify a grab gesture, to trigger a screenshot.

It may be learned that, in a scenario in which the AON camera (the front camera) is in an always-on state, although the AON camera (the front camera) continuously collects a large quantity of images, in the solution of this application, in the early-stage process of pre-sensing a service, the plurality of consecutive frames of images of the relatively small size are obtained and stored in the low-power TCM memory, and image analysis is performed on the plurality of consecutive frames of images of the relatively small size. This can greatly reduce power consumption.

The display 194 is configured to display an image, a video, and the like. The display 194 includes a display panel. The display panel may use an organic light-emitting diode (organic light-emitting diode, OLED). In some embodiments, the electronic device 100 may include one or N displays 194, where N is a positive integer greater than 1.

The electronic device 100 further includes various sensors, and may convert various different physical signals into electrical signals. The optical proximity sensor 180G may include, for example, a light-emitting diode (LED) and an optical detector, for example, a photodiode. The optical proximity sensor may turn off displaying of the display 194 and/or backlight when the electronic device 100 approaches an ear. The ambient light sensor 180L is configured to sense ambient light brightness. The electronic device 100 may adaptively adjust brightness of the display 194 based on the sensed ambient light brightness.

The touch sensor 180K is also referred to as a "touch panel". The touch sensor 180K may be disposed on the display 194. The touch sensor 180K and the display 194 form a touchscreen, also referred to as a "touch control screen". The touch sensor 180K is configured to detect a touch operation performed on or near the touch sensor 180K. The touch sensor may transfer a detected touch operation to the application processor to determine a type of a touch event. A visual output related to the touch operation may be provided by using the display 194. In some other embodiments, the touch sensor 180K may alternatively be disposed on a surface of the electronic device 100, at a position different from that of the display 194.

For example, in this embodiment of this application, the touch sensor 180K may detect a tap operation performed by the user on an icon of an application, transfer a detected tap operation to the application processor, and determine that the tap operation is used to start or run the application, to execute a running operation of the application.

The electronic device 100 implements a display function by using the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs, and the one or more GPUs execute program instructions to generate or change displayed information.

The electronic device 100 may implement a photographing function by using the ISP, the camera 193, the video codec, the GPU, the display 194, the application processor, and the like.

The foregoing specifically describes this embodiment of this application by using the electronic device 100 as an example. It should be understood that a structure shown in this embodiment of this application does not constitute a specific limitation on the electronic device 100. The electronic device 100 may have more or fewer components than those shown in the figure, or may combine two or more components, or may have different component configurations. Various components shown in the figure may be implemented in hardware, software, or a combination of hardware and software including one or more signal processing and/or application-specific integrated circuits.

In addition, an operating system runs on the foregoing components, for example, an iOS operating system developed by Apple Inc., an Android open-source operating system developed by Google Inc., or a Windows operating system developed by Microsoft Corporation. An application may be installed and run on the operating system.

An operating system of the electronic device 100 may use a layered architecture, an event-driven architecture, a microkernel architecture, a microservice architecture, or a cloud architecture. In embodiments of this application, an Android system with a layered architecture is used as an example to describe a software structure of the electronic device 100.

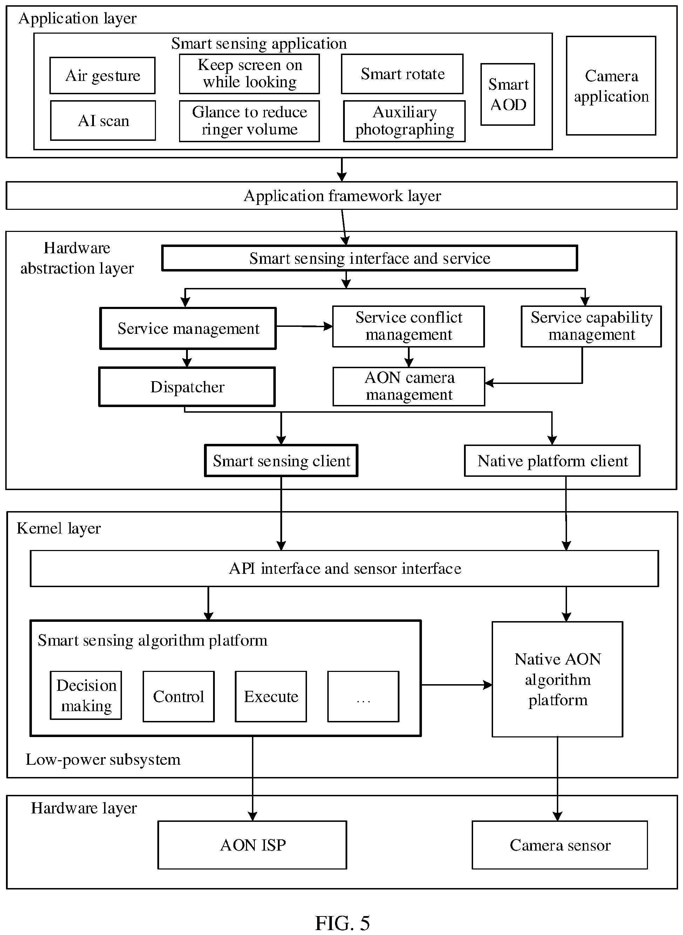

FIG. 5 is a diagram of a software architecture of the electronic device 100 according to an embodiment of this application. The solutions of the embodiments of this application are discussed based on the following technical architecture. It should be noted that, for ease of logic description, only a schematic block diagram is used to describe a service logic relationship, and a specific position of a technical architecture in which each service is located is not strictly expressed. In addition, naming of each module in the software architecture diagram is an example. Naming of each module in the software architecture diagram is not limited in this embodiment of this application. In actual implementation, specific naming of the module may be determined based on an actual requirement.

In a layered architecture, software is divided into several layers, and each layer has a clear role and task. The layers communicate with each other through a software interface. In some embodiments, an Android system includes four layers: an application layer (applications), an application framework layer (application framework), a hardware abstraction layer (hardware abstraction layer, HAL), and a kernel layer (kernel) from top to bottom.

The application layer may include a series of application packages. For example, the application layer may include applications (the application may be referred to as app for short) such as a camera and smart sensing. This is not limited in this embodiment of this application.

A smart sensing application provided in this embodiment of this application supports various services. For example, the services supported by the smart sensing application may include an air gesture service, and may further include services such as an AI scan service, a "keep screen on while looking" service, a "glance to reduce ringer volume" service, a smart rotate service, an auxiliary photographing service, and a smart AOD service. These services may be collectively referred to as smart sensing services.

It should be noted that, implementation of these services supported by the smart sensing application relies on that an AON camera (a front camera) of the electronic device is in an always-on state, and an image is collected in real time, to obtain data related to the smart sensing service. When the smart sensing application monitors and detects the service-related data, the smart sensing application sends the service-related data to a smart sensing algorithm platform. The smart sensing algorithm platform analyzes the collected image, and determines, based on an analysis result, whether to execute the service related to the smart sensing application or which specific service is to be executed.

The air gesture service is a service used by the electronic device to implement human-computer interaction by identifying a user gesture and responding based on a preset policy corresponding to the gesture. When the electronic device is in a screen-on state, the electronic device may support recognition of various preset air gestures. Different gestures may correspond to different preset policies, for example, air grab gesture → screenshot, air sliding up/down gesture → page turning, and air press gesture → call answering.

For example, the air grab gesture is used as an example. A user changes from a palm extension state to a fist clenching state, and a control manner corresponding to this gesture is preset to performing screenshot processing on a display interface of the electronic device. When the electronic device is in a screen-on state, the electronic device automatically performs a screenshot operation when detecting the air grab gesture by using the AON camera (the front camera). The air grab gesture may also be referred to as a grabshot gesture, and this scenario may be referred to as a grabshot scenario.

For example, the air sliding up/down gesture is used as an example. Fingers keeping together change from an open state to a downward bending state (a sliding up gesture), and a control manner corresponding to this gesture is preset to paging up or sliding up a screen. Fingers keeping together change from a bending state to an upward unfolding state (a sliding down gesture), and a control manner corresponding to this gesture is preset to paging down or sliding down a screen. When the electronic device is in a screen-on state, the electronic device automatically performs a page-up operation when detecting the sliding up gesture by using the AON camera (the front camera), and automatically performs a page-down operation when detecting the sliding down gesture, so that human-computer interaction can be completed without touching the electronic device by the user. The air sliding up/down gesture may also be referred to as an air scroll gesture, and this scenario may be referred to as an air scroll scenario. Herein, the air scroll gesture is described by using the upward or downward sliding gesture as an example. It may be understood that, in actual implementation, the air scroll gesture may alternatively be a left or right sliding gesture.

For another example, the air press gesture is used as an example. A palm of the user approaches a screen of the electronic device from far to near, and a control manner corresponding to this gesture is preset to answering an incoming call. When receiving an incoming call signal and displaying an incoming call interface, the electronic device automatically performs an operation of answering an incoming call when identifying the air press gesture by using the AON camera (the front camera). This scenario may be referred to as an air press scenario.

In addition, in this embodiment of this application, the air gesture service further supports a user-defined operation, for example, the user cancels "air press gesture → call answering", and resets "air press gesture -> jump to a payment code interface".

For example, when the electronic device is in a screen-on state, and the electronic device displays a home screen, the user may trigger a predefined quick service by using the air press gesture, for example, quickly jumping from the home screen to the payment code interface. In this scenario, a payment interface can be quickly accessed by using the air press gesture. Therefore, this scenario may be referred to as a smart pay scenario. It should be noted that the user may alternatively reset "air press gesture -> jump to a scan interface" or "air press gesture -> jump to a transport code interface".

It should be noted that the various services supported by the smart sensing application are examples. It may be understood that, in actual implementation, the smart sensing application in this embodiment of this application may further support another possible service, which may be specifically determined based on an actual use requirement. This is not limited in this embodiment of this application.

The application framework layer provides an application programming interface (application programming interface, API) and a programming framework for the applications at the application layer. The application framework layer includes some predefined functions. For example, the application framework layer may include a camera management module, an AON management module, and the like. This is not limited in this embodiment of this application. In this embodiment of this application, the application framework layer may also be referred to as a middle-office system framework layer.

The hardware abstraction layer is obtained by encapsulating a Linux kernel driver, and provides an interface for an upper layer. The hardware abstraction layer hides hardware interface details of a specific platform, and provides a virtual hardware platform for an operating system. In this embodiment of this application, the hardware abstraction layer includes modules such as a smart sensing interface and service module, a service management module, a service conflict management module, a service capability management module, an AON camera management module, a dispatcher, a smart sensing client, and a native platform client.

The smart sensing interface and service module provides an interface program for the upper-layer smart sensing application to access the smart sensing algorithm platform, and provides a service related to the smart sensing algorithm platform (which is also referred to as a smart sensing algorithm integration framework). In this application, a set of self-owned AON services is newly added to a camera HAL, and a platform software infrastructure supports development of a gesture recognition feature.

The service management module is configured to manage a plurality of services such as the air gesture service, the AI scan service, the "keep screen on while looking" service, the "glance to reduce ringer volume" service, the smart rotate service, the auxiliary photographing service, and the smart AOD service. In addition, the service management module may invoke the service conflict management module to make a decision.

The service conflict management module is configured to make a decision on a service in the screen-on scenario and a service in a screen-off scenario. The service conflict management module may perform service determining based on the service-related data obtained through monitoring by the upper-layer smart sensing application: whether the service-related data is an image collected in a screen-on state or an image collected in a screen-off state. In some embodiments, if the service-related data is an image collected when the electronic device is in a screen-on state, the service management module may deliver the service-related data to the smart sensing client. If the service-related data is an image collected when the electronic device is in a screen-off state and there is a face feature in the image, the service management module may determine that the smart AOD service is triggered, and deliver the service-related data to the smart sensing client. The smart sensing client has functions of proxy and forwarding data.

The service capability management module is configured to manage capability information of each service supported by the smart sensing algorithm platform. In some embodiments, the capability information of the service may be represented by a number. For example, a capability value of the air gesture service is preset to 1. In this case, a capability value of grabshot is preset to 1-1, a capability value of air scroll is preset to 1-2, and a capability value of air press is preset to 1-3. It should be noted that the capability information herein is an example, and may be specifically set based on an actual use requirement. This is not limited in this embodiment of this application.

The AON camera management module is configured to manage related data of the AON camera. Data exchange may be performed between the AON camera management module and the service conflict management module, and data exchange may also be performed between the AON camera management module and the service capability management module.

Specifically, in the solution of this application, when the user triggers to enable a specific service, the smart sensing application may obtain capability information of the service, and then the smart sensing application registers with the smart sensing algorithm platform based on the capability information of the service and subscribes to a corresponding service. After the service subscription succeeds, the smart sensing application monitors in real time whether the service is triggered. In addition, when the smart sensing application senses that the service is triggered, the smart sensing application sends service data to the smart sensing algorithm platform, performs algorithm analysis by using the smart sensing algorithm platform, and then executes the service based on an analysis result.

The dispatcher is configured to dispatch service-related data based on an indication of the service management module.

The kernel layer is a layer between hardware and software. For example, the kernel layer may include a display driver, a camera driver, and a sensor driver.

Specifically, in the solution of this application, the kernel layer may include an API interface and a sensor interface, a smart sensing algorithm integration framework (namely, the smart sensing algorithm platform), and a native AON algorithm platform.

The smart sensing algorithm platform may include a decision-making unit, a control unit, an execution unit, and the like. These units work together to complete low-power algorithm analysis on the service-related data to obtain an image analysis result, and report the image analysis result to the smart sensing application. The smart sensing algorithm platform and the related functional modules may also be collectively referred to as a low-power subsystem.

In this application, an improvement is performed at a system bottom layer of a mobile phone. The smart sensing algorithm platform is newly constructed based on the native AON algorithm platform. Based on support of the smart sensing algorithm platform, an AON function can be applied to a gesture control screen scenario in which the mobile phone is in a screen-on state. In an AON smart sensing scenario, the AON camera (the front camera) is always on and collects an image for smart sensing of the user gesture, to implement an air operation screen. This greatly meets a user requirement and can improve user experience.

It should be noted that, in this embodiment of this application, in a preliminary gesture sensing phase (the first phase) in an early stage, the smart sensing client monitors, by performing image analysis on the service-related data, whether the service-related data meets a preset service trigger condition. Therefore, a requirement on image quality is relatively low. In a specific gesture recognition phase (the second phase) in a later stage, the smart sensing algorithm platform identifies specific service content by performing image analysis on service-related data that meets the preset service trigger condition. Therefore, a requirement on image quality is relatively high.

In the first phase, the service-related data includes a plurality of consecutive frames of images, which are all small-sized and low-resolution images, and the low-power TCM memory described above is used for data caching. In the second phase, the service-related data includes a plurality of consecutive frames of images, which are all large-sized and high-resolution images, and the normal-power DDR memory and the low-power TCM memory described above are used for data caching. In the solution of this application, the image analysis is performed in phases, so that the service can be accurately monitored, and power consumption is effectively reduced.

It should be noted that, in this embodiment of this application, a smart sensing service and the smart sensing algorithm integration framework are mainly added based on the native AON algorithm platform. In this application, the smart sensing service and the smart sensing algorithm integration framework cooperate with the native AON algorithm platform, to implement a low-power AON smart sensing function and service.

In one aspect, the smart sensing service provides a unified service interface externally, and supports a service related to smart sensing in using an AON capability of the native AON algorithm platform. Further, an interface of the native AON algorithm platform is blocked, and a native interface is no longer open externally.

In another aspect, the smart sensing service establishes complete service interaction with the smart sensing algorithm integration framework based on a platform communication channel, to use a low-power computing capability of the AON camera and the native AON algorithm platform.

In still another aspect, the smart sensing algorithm integration framework builds a unified low-power computing platform by integrating AON camera resources, conventional sensor data, and an integrated service algorithm, to support the AON service.

The hardware layer provides various hardware devices. For example, hardware devices in this embodiment of this application include an AON ISP, a camera sensor, a camera lens of a camera, and the like. The camera lens of the camera and the camera sensor are jointly configured to collect an image in real time, and the AON ISP is configured to perform image signal processing on a collected image. These hardware devices provide hardware support for the smart sensing algorithm platform.

It should be noted that FIG. 5 shows only modules related to this embodiment of this application. Each layer may further include any other possible modules, and each module may further include one or more submodules. This is not limited in this application.

It should be further noted that although the Android system is used as an example for description in this embodiment of this application, a basic principle thereof is also applicable to an electronic device based on an operating system such as iOS or Windows.

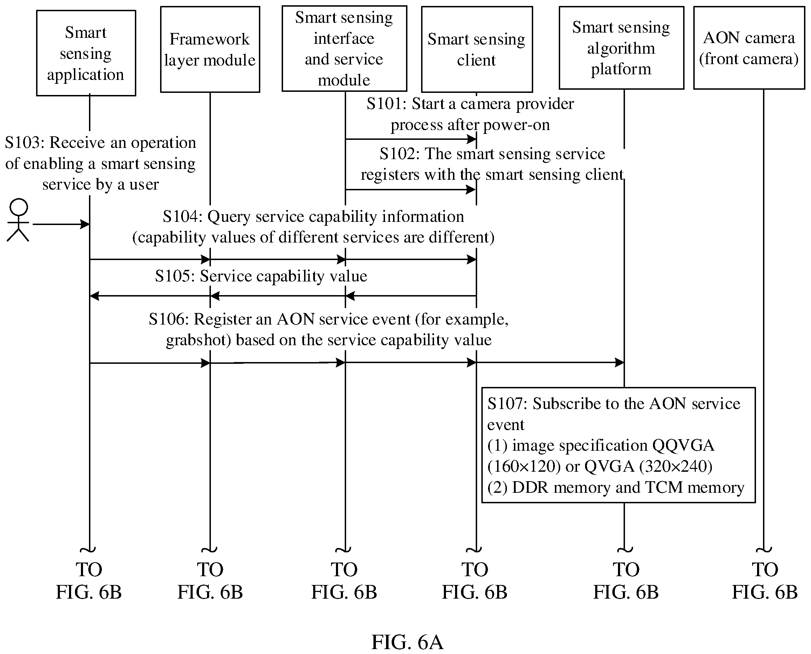

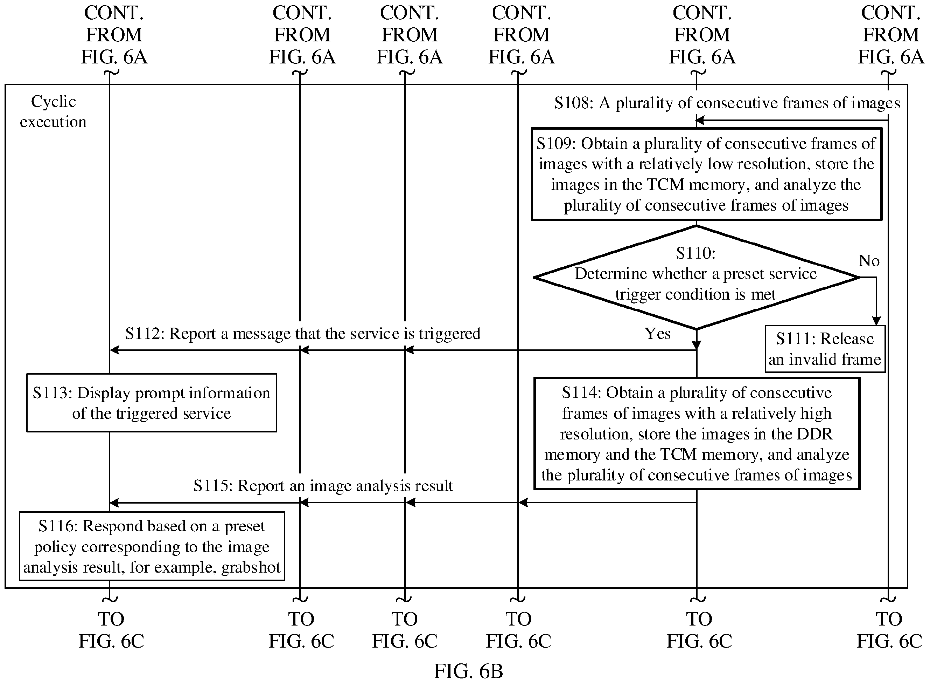

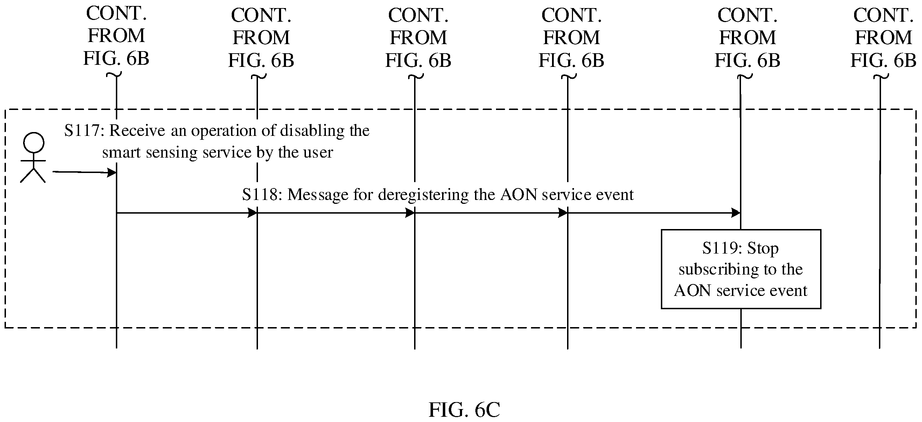

The following describes a time sequence diagram of interaction between modules in the technical architecture provided in an embodiment of this application by using FIG. 6A to FIG. 6C. Information exchange among a smart sensing application, a framework layer module, a smart sensing interface and a smart sensing service module (which are collectively referred to as a smart sensing interface and service module), a smart sensing client, a smart sensing algorithm platform, and an AON camera (a front camera) describes an example process in which an electronic device implements AON smart sensing by using the AON camera (the front camera).

S101: After the electronic device is powered on, the smart sensing service module interacts with the smart sensing client to start a camera provider process.

S102: The smart sensing service module applies for registration with the smart sensing client.

S103: The smart sensing application receives an operation of enabling a smart sensing service by a user.

It should be noted that the smart sensing service herein may be any one of the following: an air gesture service, an AI scan service, a "keep screen on while looking" service, a "glance to reduce ringer volume" service, a smart rotate service, an auxiliary photographing service, and a smart AOD service. The user may enable or disable one or more of the foregoing functions based on an actual use requirement. For ease of description, the following uses an example in which the user triggers to enable a grabshot service for example description.

S104: The smart sensing application queries capability information of the grabshot service from the smart sensing client in response to an operation that the user triggers to enable the grabshot service.

The smart sensing application sends a message for querying a service capability to the framework layer module. The framework layer module delivers the message to the smart sensing interface and service module. Then, the smart sensing interface and service module transfers the message to the smart sensing client. The smart sensing client may invoke a capability management module to query the capability information of the grabshot service.

Capability values of different services are different. For example, a capability value of the grabshot service is 1-1, a capability value of an air scroll service is 1-2, and a capability value of an air press service is 1-3.

S105: The smart sensing client feeds back the found service capability information to the smart sensing application.

S106: The smart sensing application registers an AON service event with the smart sensing algorithm platform based on the service capability value.

A data stream for registration starts from the smart sensing application, successively passes through the framework layer module, the smart sensing interface and service module, and the smart sensing client, and reaches the smart sensing algorithm platform.

S107: The smart sensing algorithm platform subscribes to the AON service event based on the service capability value.

For example, it is assumed that the service capability value is 1-1, and it may be learned from the foregoing description that the capability value of the grabshot service is 1-1. In this case, the AON service event subscribed by the smart sensing algorithm platform is the grabshot service.

When the AON service event is subscribed, the smart sensing algorithm platform uses a relatively low-resolution image specification, for example, QQVGA (160×120), in some cases based on a requirement, and uses a relatively high-resolution image specification, for example, QVGA (320×240), in some other cases. In addition, the smart sensing algorithm platform uses a TCM memory for data caching in some cases based on a requirement, and uses a DDR memory and the TCM memory together for data storage in some other cases.

The following S108-S117 are a cyclic execution process of AON smart sensing.

S108: The AON camera (the front camera) collects a plurality of consecutive frames of images when the screen of the device is on and off, and transfers the plurality of consecutive frames of collected images to the smart sensing algorithm platform.

S109: The smart sensing algorithm platform obtains a plurality of consecutive frames of images with a relatively low resolution, stores the images in the TCM memory, and analyzes the plurality of consecutive frames of images.

For example, the AON camera outputs a relatively low-resolution image based on the QQVGA (160×120) specification. Correspondingly, the smart sensing algorithm platform obtains the relatively low-resolution image of the QQVGA (160×120) specification for image analysis.

S110: The smart sensing algorithm platform determines, based on an analysis result, whether a preset service trigger condition is met.

For example, the preset service trigger condition may include: The image includes a hand feature, or the image includes a two-dimensional code feature, or the image includes a human-eye feature, or the image includes a face feature. It should be noted that the preset service trigger condition is described herein as an example, and may be specifically set based on an actual use requirement. This is not limited in this embodiment of this application.

For example, assuming that an analysis result indicates that there is a hand feature in the image, and the preset service trigger condition is met, it may be determined that the air gesture service is triggered.

For another example, assuming that the analysis result indicates that there is a human-eye feature in the image, and the preset service trigger condition is met, it may be determined that a smart glance service is triggered.

Sill: When it is determined, based on the analysis result, that the preset service trigger condition is not met, the smart sensing client does not respond, and releases an invalid frame.

After it is determined, in S110, that the preset service trigger condition is met, S 112-S113 continue to be performed. In addition, after it is determined, in S110, that the preset service trigger condition is met, S 114 continues to be performed.

S112: The smart sensing client reports, to the smart sensing application, a message that the service is triggered.

S 113: The smart sensing application displays prompt information corresponding to the triggered service on a screen.

S 114: The smart sensing algorithm platform obtains a plurality of consecutive frames of images with a relatively high resolution, stores the images in the DDR memory and the TCM memory, and analyzes the plurality of consecutive frames of images to obtain an image analysis result.

For example, the AON camera outputs a relatively high-resolution image based on the QVGA (320×240) specification. Correspondingly, the smart sensing algorithm platform obtains the relatively high-resolution image of the QVGA (320×240) specification for image analysis.

It should be noted that the DDR memory and the TCM memory respectively run in different hardware buffers. The DDR memory may access data in the TCM memory, and the TCM memory does not support access to data in the DDR memory.

S115: The smart sensing algorithm platform reports the image analysis result to the smart sensing application.

S 116: The smart sensing application responds based on a preset policy corresponding to the image analysis result.

For example, after analysis is performed on the plurality of consecutive frames of images, it is found that a user gesture is specifically a grab gesture, that is, the image analysis result is the grab gesture, and a preset policy corresponding to the grab gesture is grabshot. Therefore, the smart sensing application responds based on the preset policy corresponding to the grab gesture, for example, grabshot.

The foregoing describes a process in which the user triggers to enable a smart sensing function and performs AON smart sensing. In some embodiments, the user may trigger, based on a usage requirement, to disable the smart sensing service. For a specific process, refer to the following S117-S119.

S117: The smart sensing application receives an operation of disabling the smart sensing service by the user.

The smart sensing function herein may include any one of the following: an air gesture service, an AI scan service, a "keep screen on while looking" service, a "glance to reduce ringer volume" service, a smart rotate service, an auxiliary photographing service, and a smart AOD service. The user may disable one or more of the foregoing functions based on an actual use requirement. For ease of description, the following uses an example in which the user triggers to disable the grabshot service for example description.

S118: In response to a user operation, the smart sensing application sends, to the smart sensing algorithm platform, a message for deregistering the AON service event.

S 119: The smart sensing algorithm platform stops subscribing to the AON service event.

For example, the AON service event is the grabshot service. After a subscription to the grabshot service is stopped, the grabshot service is not triggered. In other words, the mobile phone no longer makes a screenshot response to the grabshot gesture.

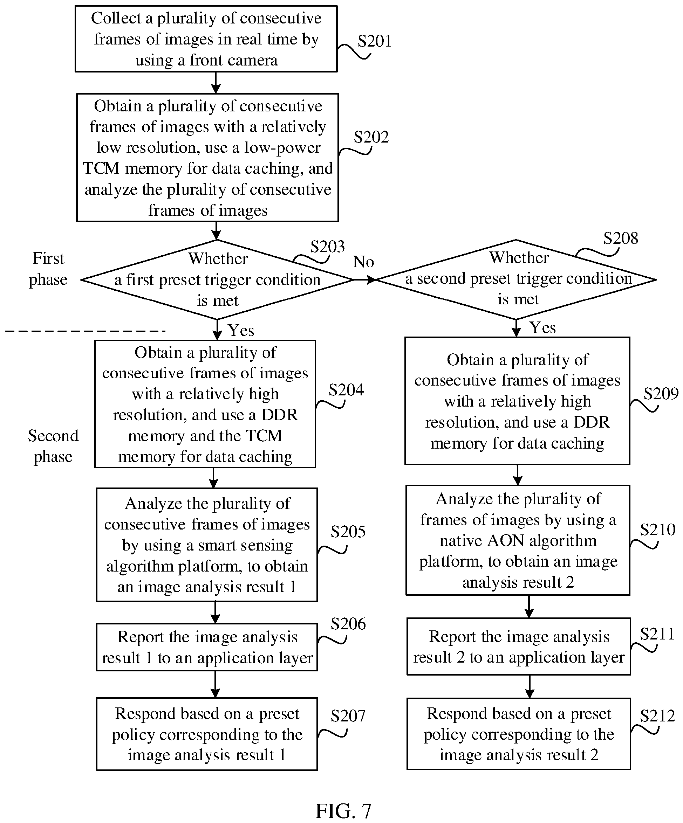

Based on the foregoing software architecture shown in FIG. 5 and with reference to the time sequence diagram shown in FIG. 6A to FIG. 6C, the foregoing describes service sensing and identification in the air gesture recognition method provided in the embodiments of this application from a local perspective of the newly-added smart sensing algorithm platform. With reference to a flowchart shown in FIG. 7, the following describes the air gesture recognition method provided in the embodiments of this application from an overall perspective of a native AON algorithm platform and the newly-added smart sensing algorithm platform.

First, it should be noted that a service supported by the native AON algorithm platform for processing includes a face unlock screen service. Services supported by the newly-added smart sensing algorithm platform include an air gesture service, an AI scan service, a "keep screen on while looking" service, a "glance to reduce ringer volume" service, a smart rotate service, an auxiliary photographing service, and a smart always on display service.

S201: Collect a plurality of consecutive frames of images in real time by using the AON camera (the front camera) of the electronic device.

S202: Obtain a plurality of consecutive frames of images with a relatively low resolution (for example, a QQVGA specification), use a low-power TCM memory for data caching, and analyze the plurality of consecutive frames of images.

The AON camera (the front camera) outputs a relatively high-resolution image based on a QVGA (320×240) specification. Correspondingly, the smart sensing algorithm platform obtains the relatively high-resolution image of the QVGA (320×240) specification for image analysis.

S203: Determine, based on an image analysis result, whether a first preset trigger condition is met.

Whether a service is triggered may be determined by determining whether the analysis result meets the first preset trigger condition.

For example, the first preset trigger condition may be any one of the following: The image includes a first preset feature, and the image is an image collected when the screen is on and unlocked; or the image includes the first preset feature, and the image is an image collected when the screen is off. The first preset feature may include any one of a face feature, a human-eye feature, a gesture feature, and a two-dimensional code feature.

In one aspect, when it is determined, in S204, that the first preset trigger condition is met, the following S204-S207 continue to be performed. That is, service data processing is performed by using the newly-added smart sensing algorithm platform. As described above, preset services supported by the newly-added smart sensing algorithm platform for processing may include an air gesture service, an AI scan service, a "keep screen on while looking" service, a "glance to reduce ringer volume" service, a smart rotate service, an auxiliary photographing service, and a smart AOD service.

S204: Obtain a plurality of consecutive frames of images with a relatively high resolution (for example, a QVGA specification), and use a DDR memory and the TCM memory for data caching.

S205: Analyze the plurality of consecutive frames of images by using the newly-added smart sensing algorithm platform, to obtain an image analysis result 1.

S206: The newly-added smart sensing algorithm platform reports the image analysis result 1 to an application layer.

S207: Respond based on a preset policy corresponding to the image analysis result 1.

For example, the plurality of consecutive frames of images collected by the front camera are analyzed. In this case, the plurality of consecutive frames of images are low-resolution images, and a low-power memory is used for caching. If it is found that the plurality of consecutive frames of images meet the first preset trigger condition, it may be determined that a service is triggered. For example, the plurality of consecutive frames of images include a two-dimensional code feature, and in this case, it may be determined that a triggered service is the AI scan service. It may be learned from determining that the AI scan service is a preset service of the newly-added smart sensing algorithm platform. Therefore, an analysis task of the service is allocated to the newly-added smart sensing algorithm platform, and the newly-added smart sensing algorithm platform performs image analysis on the plurality of consecutive frames of images. In this case, the plurality of consecutive frames of images are high-resolution images, and a normal-power memory and the low-power memory are used for caching.

In another aspect, when it is determined, in S204, that the first preset trigger condition is not met, the following S208-S212 continue to be performed. In other words, service data processing is performed by using the native AON algorithm platform.

S208: First determine, based on the image analysis result, whether a second preset trigger condition is met.

For example, the second preset trigger condition is that the image includes a face feature, and the image is an image collected when the screen is on and locked.

S209: When it is determined that the second preset trigger condition is met, obtain a plurality of consecutive frames of images with a relatively high resolution (for example, a VGA specification), and use a DDR memory for data caching.

S210: Analyze the plurality of consecutive frames of images by using the native AON algorithm platform, to obtain an image analysis result 2.

S211: The native AON algorithm platform reports the image analysis result 2 to an application layer.

S212: Respond based on a preset policy corresponding to the image analysis result 2.

For example, the plurality of consecutive frames of images collected by the front camera are analyzed. In this case, the plurality of consecutive frames of images are low-resolution images, and the low-power memory is used for caching. If it is found that the plurality of consecutive frames of images meet the first preset trigger condition, it may be determined that a service is triggered. For example, the plurality of consecutive frames of images collected when the screen of the electronic device is on and locked include a face feature, and in this case, it may be determined that a triggered service is a face unlock screen service. It may be learned from determining that the face unlock screen service is a preset service in the native AON algorithm platform. Therefore, an analysis task of the service is allocated to the native AON algorithm platform, and the native AON algorithm platform performs image analysis on the plurality of consecutive frames of images. In this case, the plurality of consecutive frames of images are high-resolution images, and the normal-power memory and the low-power memory are used for caching.

It should be noted that in this embodiment of this application, when it is determined that the first preset trigger condition is not met and the second preset trigger condition is not met, that is, when no service is triggered, the plurality of consecutive frames of collected images are discarded, and then the foregoing S201 is performed again.

In this embodiment of this application, AON smart sensing is implemented by using the newly-added smart sensing algorithm platform and the native AON algorithm platform together. An image processing process completed by using the smart sensing algorithm platform may be divided into two phases:
In a first phase, as in the foregoing S201-S203, a coarse analysis is performed on the plurality of consecutive frames of images collected by the front camera to determine whether the plurality of consecutive frames of images meet the first preset trigger condition, to determine whether a service is triggered. In the first phase, the plurality of consecutive frames of images are low-resolution images, and the low-power memory is used for data caching.

In a second phase, as in the foregoing S204-S207, a fine analysis is performed on the plurality of consecutive frames of images collected by the front camera, to identify specific content of the triggered service. In the second phase, the plurality of consecutive frames of images are high-resolution images, and the normal-power memory and the low-power memory are used together for data caching.

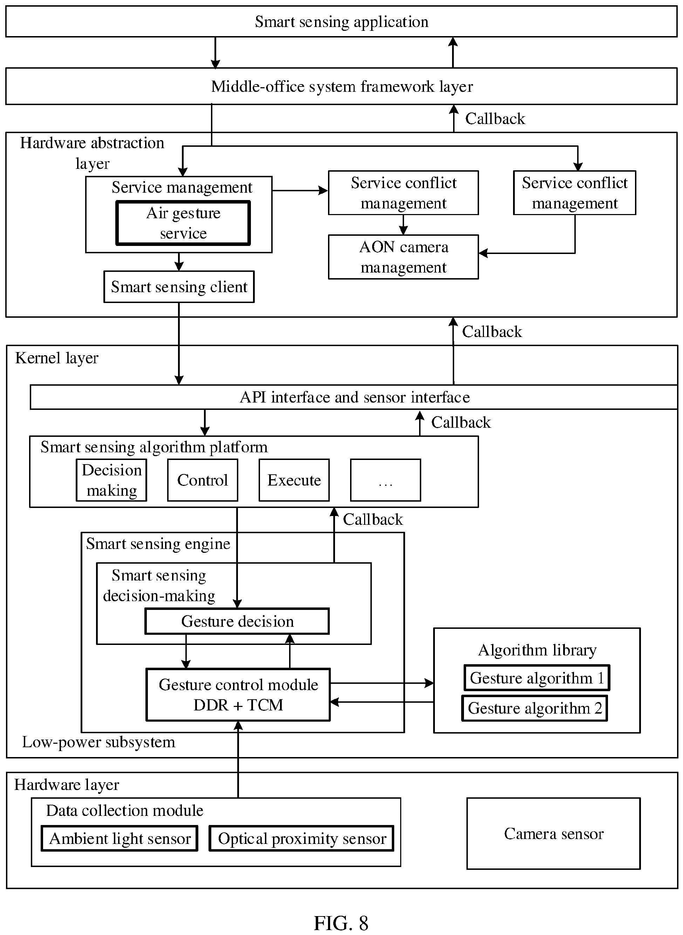

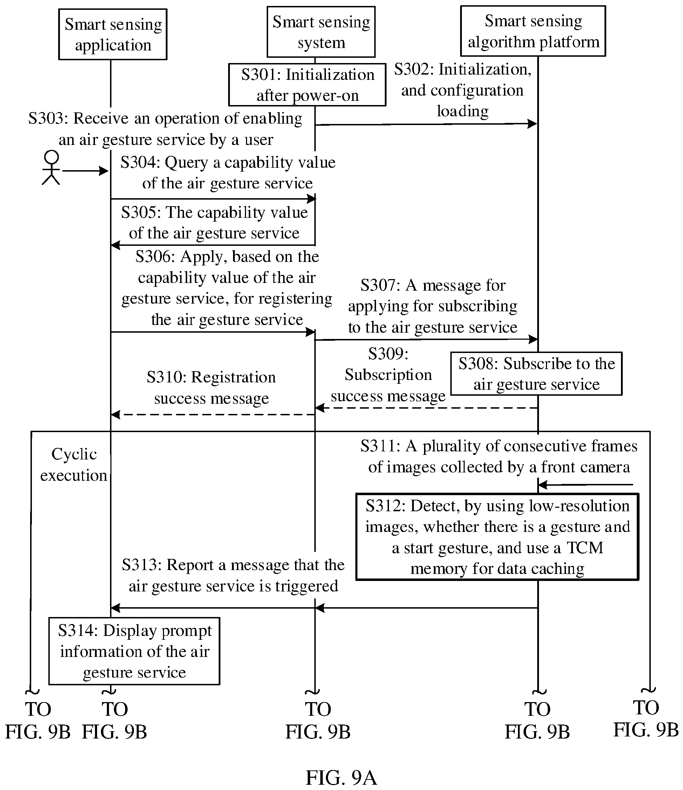

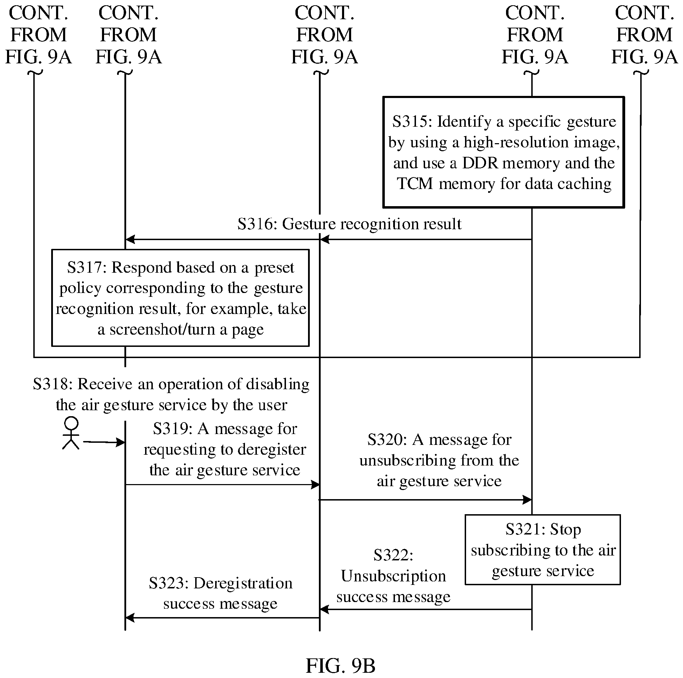

FIG. 5-FIG. 7 describe, from different perspectives, a software architecture of the AON function and the time sequence diagram of the interaction between the modules implemented by using the newly-added smart sensing algorithm platform in this embodiment of this application. With reference to FIG. 8 and FIG. 9A and FIG. 9B, the following describes, from a perspective of an air gesture service, a software architecture of an air gesture recognition function and a time sequence diagram of interaction between modules implemented by using the newly-added smart sensing algorithm platform in this embodiment of this application.

In a software framework shown in FIG. 8, at a hardware abstraction layer, the smart sensing application delivers an air gesture service to the service management module. Then, the service management module delivers the air gesture service to the smart sensing client. Further, the smart sensing client delivers the air gesture service to the smart sensing algorithm platform.

Different from that in the modules embodied in a software framework shown in FIG. 6A to FIG. 6C, a smart sensing engine module and an algorithm library are added to and displayed at a kernel layer in the software framework shown in FIG. 8. The smart sensing engine module includes a smart sensing decision-making module (a gesture decision) and a gesture control module. The algorithm library provides a gesture algorithm 1 and a gesture algorithm 2. During an implementation, after the smart sensing algorithm platform receives the air gesture service delivered by an upper layer, the smart sensing algorithm platform indicates the smart sensing engine module to make a gesture decision. Then, the gesture control module performs gesture recognition: invokes the gesture algorithm 1 to perform image analysis on a plurality of consecutive frames of images cached in a TCM memory to determine whether there is a hand feature and a start gesture; and when it is determined that there is the hand feature and the start gesture, invokes the gesture algorithm 2 to perform image analysis on a plurality of consecutive frames of images cached in a DDR memory and the TCM memory to identify a specific gesture.

In addition, different from that in the modules embodied in the software framework shown in FIG. 6A to FIG. 6C, a data collection module is added to and displayed at a hardware layer in the software framework shown in FIG. 8. The data collection module includes an ambient light sensor and an optical proximity sensor. The ambient light sensor may be configured to sense ambient light brightness, and determine, based on sensed ambient light brightness, whether the screen of the electronic device is placed face down on a table. The optical proximity sensor is configured to determine whether the screen of the electronic device is blocked. The data collection module may report collection data of the ambient light sensor and the optical proximity sensor to the gesture control module, and the gesture control module determines, based on the collection data, whether to start a gesture recognition service. In some embodiments, a detection procedure of a first phase starts only when it is determined that the screen of the electronic device is not blocked and the screen of the electronic device is not placed face down on the table. In some other embodiments, the detection procedure of the first phase starts only when it is determined that the screen of the electronic device is not blocked.

It should be noted that FIG. 8 shows only modules related to this embodiment of this application. Each layer may further include any other possible modules, and each module may further include one or more submodules. This is not limited in this application.

The following describes a time sequence diagram of interaction between modules in the technical architecture provided in FIG. 8 with reference to FIG. 9A and FIG. 9B. The interaction modules include a smart sensing application, a smart sensing system, and a smart sensing algorithm platform. The smart sensing system includes a framework layer module, a smart sensing interface, a smart sensing service module, and a smart sensing client. For ease of description, modules such as the AON camera (the front camera) are omitted in FIG. 9A and FIG. 9B.

FIG. 9A and FIG. 9B describe an example process of enabling an air gesture service, applying the air gesture service, and disabling the air gesture service in an AON smart sensing scenario. As shown in FIG. 9A and FIG. 9B, a process of enabling the air gesture service includes S301-S310, a process of applying the air gesture service includes S311-S314, and a process of disabling the air gesture service includes S318-S323.

S301: After the electronic device is powered on, the smart sensing system is initialized.

Referring to the foregoing S101, after the electronic device is powered on, the smart sensing service module interacts with the smart sensing client to start a camera provider process.

S302: The smart sensing system performs initialization interaction with the smart sensing algorithm platform to complete configuration loading.

S303: The smart sensing application receives an operation of enabling the air gesture service by a user.

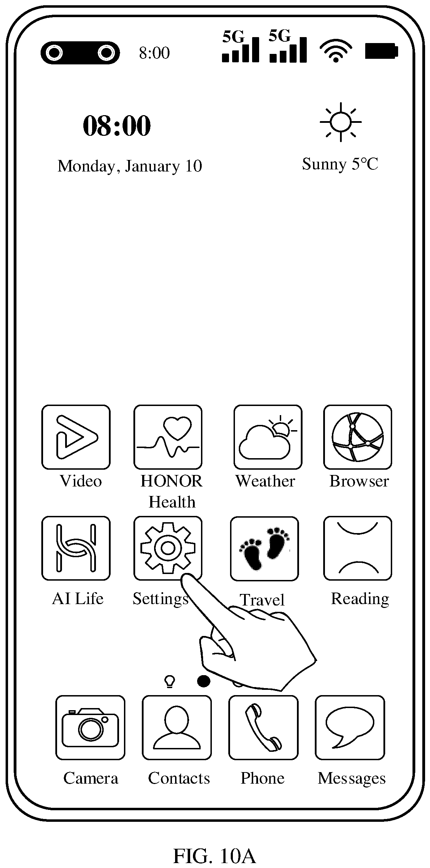

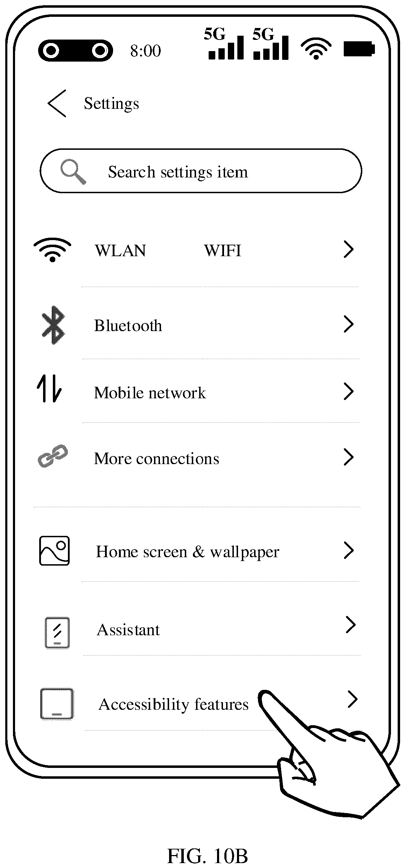

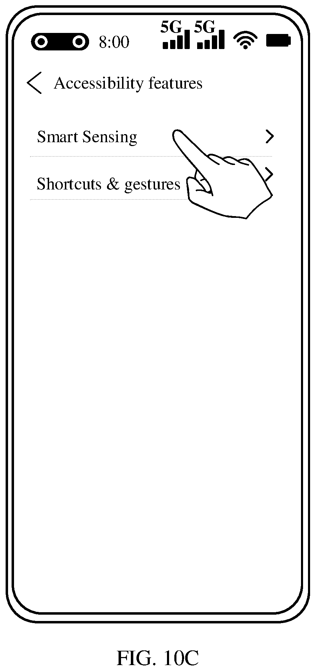

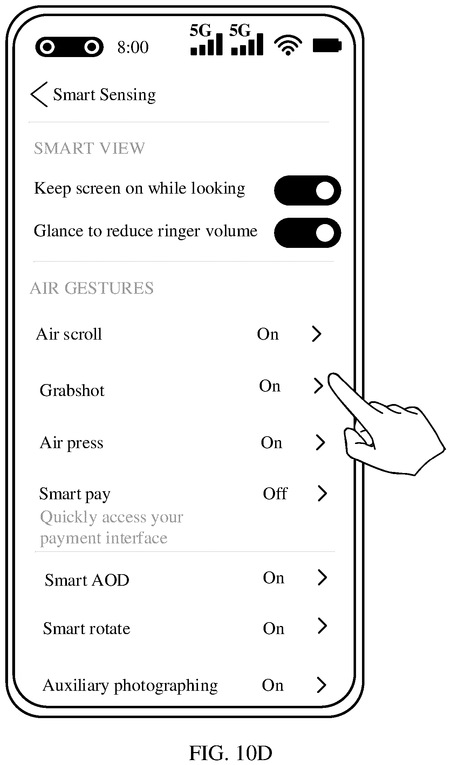

For example, FIG. 10A to FIG. 10D are a schematic diagram of an interaction interface when a user enables an air gesture service. As shown in FIG. 10A and FIG. 10B, the electronic device displays a settings home screen in response to an operation of tapping a setting application icon on a home screen by the user. Accessibility features options are displayed in the settings home screen. As shown in FIG. 10B and FIG. 10C, the electronic device displays an accessibility features interface in response to an operation of tapping the accessibility features option by the user. A smart sensing option is displayed in the accessibility features interface. As shown in FIG. 10C and FIG. 10D, the electronic device displays a smart sensing setting interface in response to an operation of tapping the smart sensing option by the user.

As shown in FIG. 10D, an air gesture setting bar and another setting bar are displayed in the smart sensing setting interface. The air gesture setting bar includes a switch of air scroll, a switch of grabshot, a switch of air press, and a switch of smart pay. The electronic device enables or disables some or all of sub-services in the air gesture service in response to an operation of tapping the switch in the air gesture setting bar by the user.

S304: The smart sensing application queries a capability value of the air gesture service from the smart sensing system in response to an operation that the user triggers to enable the air gesture service.

Capability values of different services are different. For example, a capability value of the air gesture service is 1. In this case, a capability value of a grabshot service is 1-1, a capability value of an air scroll service is 1-2, and a capability value of an air press service is 1-3.

S305: The smart sensing system feeds back the found capability value to the smart sensing application.

S306: The smart sensing application applies, based on the capability value, to the smart sensing system for a message for registering the air gesture service.

Correspondingly, the smart sensing system registers the air gesture service.

S307: The smart sensing system applies to the smart sensing algorithm platform for subscribing to the air gesture service.

S308: The smart sensing algorithm platform subscribes to the air gesture service based on the service capability value.

For example, the air gesture service includes sub-services such as the grabshot service, the air scroll service, and the air press service. Optionally, all the sub-services in the air gesture service may be subscribed at one single time, or one or more sub-services in the air gesture service may be subscribed.

For example, when the service capability value is 1-1, the smart sensing algorithm platform subscribes to the grabshot service based on the service capability value.

For example, when the service capability value is 1-2, the smart sensing algorithm platform subscribes to the air scroll service based on the service capability value.

For example, when the service capability value is 1-3, the smart sensing algorithm platform subscribes to the air press service based on the service capability value.

For example, when the service capability value is 1, the smart sensing algorithm platform subscribes to the air gesture service based on the service capability value. In this case, air gesture services such as the grabshot service, the air scroll service, and the air press service are all subscribed.

When the air gesture service or any sub-service is subscribed, images of different specifications and memories are used at different phases on a side of the smart sensing algorithm platform. In one aspect, in a first phase, a relatively low-resolution image of a QQVGA (160×120) specification is obtained; and in a second phase, a relatively high-resolution image of a QVGA (320×240) specification is obtained. In another aspect, in the first phase, the smart sensing algorithm platform uses a TCM memory for data caching; and in the second phase, a DDR memory and the TCM memory are used together for data storage.

S309: The smart sensing algorithm platform returns a subscription success message to the smart sensing system.

S310: The smart sensing system feeds back a registration success message to the smart sensing application.

The following S311-S317 are a cyclic detection process of a gesture recognition service.

S311: The smart sensing algorithm platform obtains a plurality of consecutive frames of images collected by the front camera.

When the screen of the device is on, the AON camera (the front camera) collects the plurality of consecutive frames of images, outputs, based on an indication of the smart sensing algorithm platform, the plurality of consecutive frames of collected images based on the QQVGA (160×120) specification, to obtain a relatively low-resolution image, and transfers the image to the smart sensing algorithm platform.

S312: The smart sensing algorithm platform detects, by using the low-resolution images, whether there is a gesture and a start gesture, and uses the TCM memory for data caching.

In this implementation of this application, the smart sensing algorithm platform stores the obtained low-resolution image in the TCM memory, and analyzes the plurality of consecutive frames of images with a low resolution to detect whether there is the gesture and the start gesture.

Then, the smart sensing algorithm platform determines, based on an analysis result, whether a preset service trigger condition is met. For example, the preset service trigger condition may include: The image includes a hand feature.

In some embodiments, when it is determined, based on the analysis result, that the preset service trigger condition is not met, the smart sensing algorithm platform does not respond, and releases an invalid frame.

In some other embodiments, assuming that the analysis result indicates that there is the hand feature in the image, and the preset service trigger condition is met, it may be determined that the air gesture service is triggered, and then S313 is performed.

S313: The smart sensing algorithm platform reports, to the smart sensing application, a message that the service is triggered.

S314: The smart sensing application displays prompt information corresponding to the air gesture service on the screen.

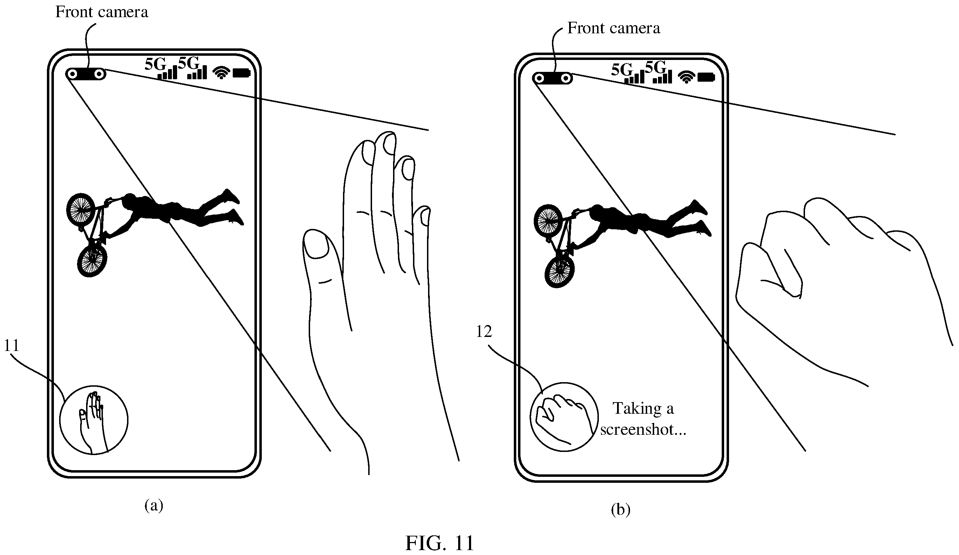

For example, FIG. 11 is a schematic diagram of an interaction interface when an air gesture service is triggered. As shown in (a) in FIG. 11, the front camera collects an image of an open palm of the user. After image analysis, it may be determined that the air gesture service is triggered. In this case, a screen of a mobile phone may display an image 11 of the open palm. As shown in (b) in FIG. 11, the front camera collects an image that the user pinches and spreads. After image analysis, it may be determined that the air gesture service triggered by the user is specifically the grabshot service. Correspondingly, in this case, the screen of the mobile phone may display an image 12 of a closed palm, and display prompt information of "taking a screenshot". In this way, after seeing the prompt information displayed on the mobile phone, the user can learn that an air gesture made by the user is being identified by the mobile phone, improving interaction experience of the user.

In addition, when it is determined, in S312, that the air gesture service is triggered, the following S315 is further performed. Before S315 is performed, the smart sensing algorithm platform sends a message to the AON camera to indicate the AON camera to output the plurality of consecutive frames of collected images based on the QVGA (210×240) specification. Correspondingly, the AON camera (the front camera) outputs, based on an indication of the smart sensing algorithm platform, the plurality of consecutive frames of collected images based on the QVGA (210×240) specification, to obtain a relatively high-resolution image, and transfers the image to the smart sensing algorithm platform.

S315: The smart sensing algorithm platform identifies a specific gesture by using the high-resolution image, and uses the DDR memory and the TCM memory for data caching.

The smart sensing algorithm platform obtains the plurality of consecutive frames of images of the QVGA (320×240) specification that have a relatively high resolution, stores the images in the DDR memory and the TCM memory, and analyzes the plurality of consecutive frames of images to obtain an image analysis result.

S316: The smart sensing algorithm platform reports a gesture recognition result to the smart sensing application.

S317: The smart sensing application responds based on a preset policy corresponding to the gesture recognition result, for example, takes a screenshot/turns a page.

For example, after analysis is performed on the plurality of consecutive frames of images, it is found that a user gesture is specifically a grab gesture, that is, the gesture recognition result is the grab gesture, and a preset policy corresponding to the grab gesture is grabshot. Therefore, the smart sensing application responds based on the preset policy corresponding to the grab gesture, namely, grabshot.

The foregoing describes a process in which the user triggers to enable the air gesture service and performs the air gesture service. In some embodiments, the user may trigger, based on a usage requirement, to disable the air gesture service. For a specific process, refer to the following S318-S323.

S318: The smart sensing application receives an operation of disabling the air gesture service by the user.

S319: In response to the user operation, the smart sensing application delivers, to the smart sensing system, a message for requesting to deregister the air gesture service.

Correspondingly, the smart sensing system deregisters the air gesture service.

S320: The smart sensing system sends, to the smart sensing algorithm platform, a message for unsubscribing from the air gesture service.

S321: The smart sensing algorithm platform stops subscribing to the air gesture service.

For example, after a subscription to the grabshot service is stopped, the grabshot service is not triggered. In other words, the mobile phone no longer makes a screenshot response to a grabshot gesture.

For example, after a subscription to the air gesture service is stopped, none of the air gesture services is triggered. In other words, the mobile phone no longer makes a screenshot response to air gestures.

S322: The smart sensing algorithm platform reports an unsubscription success message to the smart sensing system.

S323: The smart sensing system reports a deregistration success message to the smart sensing application.

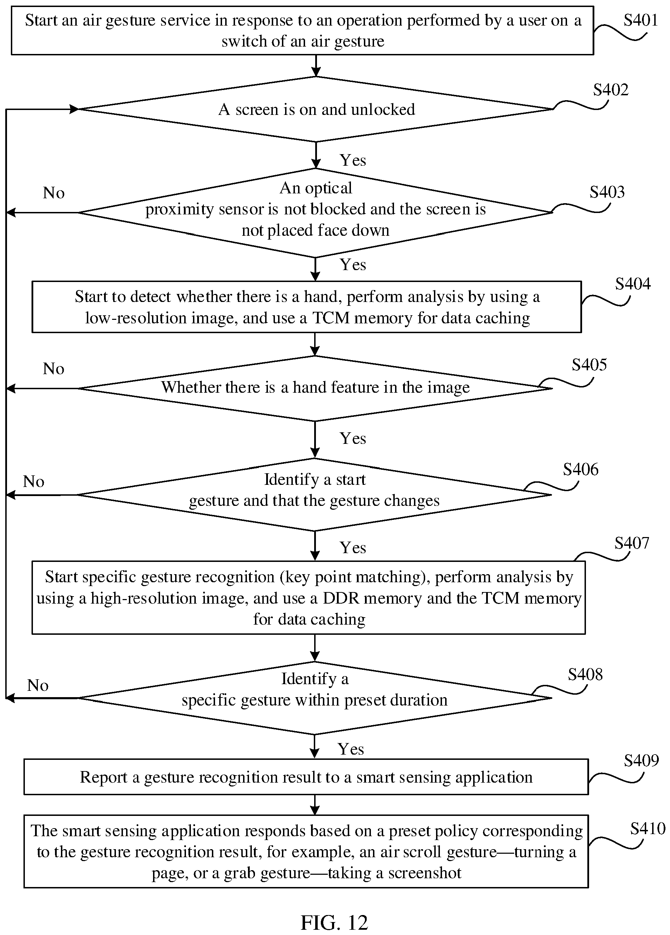

Based on the software architecture shown in FIG. 8 and with reference to the time sequence diagram shown in FIG. 9A and FIG. 9B, the foregoing describes the air gesture recognition method provided in the embodiments of this application. With reference to a flowchart shown in FIG. 12, the following further describes a specific implementation process of the air gesture recognition method provided in the embodiments of this application.

S401: The electronic device starts an air gesture service in response to an operation performed by the user on a switch of an air gesture.

S402: The electronic device determines whether the screen is in a screen-on and unlocked state.

Optionally, when it is determined that the screen is in the screen-on and unlocked state, the following S403 continues to be performed; or when it is determined that the screen is in the screen-on and unlocked state, the following S404 continues to be performed. When it is determined that the screen is not in the screen-on and unlocked state, S401 is performed again.

S403: The electronic device determines whether the optical proximity sensor is not blocked and whether the screen is not placed face down.

The electronic device may determine, based on detection data of the optical proximity sensor, whether the optical proximity sensor is blocked. The electronic device may determine, based on detection data of the ambient light sensor, whether the screen is placed face down.

If the electronic device determines that the optical proximity sensor is not blocked and the screen is not placed face down, the following S404 continues to be performed.

If the electronic device determines that the optical proximity sensor is blocked or the screen is placed face down (faces downward), the foregoing S402 is performed again.

S404: The electronic device starts to detect whether there is a hand, performs analysis by using a low-resolution image, and uses a TCM memory for data caching.

S405: The electronic device determines, by detecting whether there is a hand, whether there is a hand feature in the image.

If it is determined that there is the hand feature in the image, the following S406 continues to be performed. If it is determined that there is no hand feature in the image, the foregoing S402 is performed again.

S406: Whether the electronic device identifies a start gesture and that the gesture changes.

If the start gesture is identified within specific duration and the gesture changes, the following S407 continues to be performed. If the start gesture is not identified within the specific duration, or if the start gesture is identified within the specific duration but the gesture does not change, the foregoing S402 is performed again.

S407: The electronic device starts specific gesture recognition, performs analysis by using a high-resolution image, and uses a DDR memory and the TCM memory for data caching.

The electronic device may perform the specific gesture recognition by using a hand key point matching technology.

S408: The electronic device determines whether a specific gesture is identified within preset duration.

If the specific gesture is identified within the preset duration, the following S409 continues to be performed. If no specific gesture is identified within the preset duration, the foregoing S402 is performed again.

S409: The electronic device reports a gesture recognition result to the smart sensing application.

S410: The smart sensing application responds based on a preset policy corresponding to the gesture recognition result.

For example, when the gesture recognition result is an air scroll gesture, the electronic device makes a screen sliding response based on a preset policy corresponding to the air scroll gesture, for example, the electronic device controls screen display content to page up or down.

For another example, when the gesture recognition result is a grab gesture, the electronic device makes a screenshot response based on a preset policy corresponding to the grab gesture.

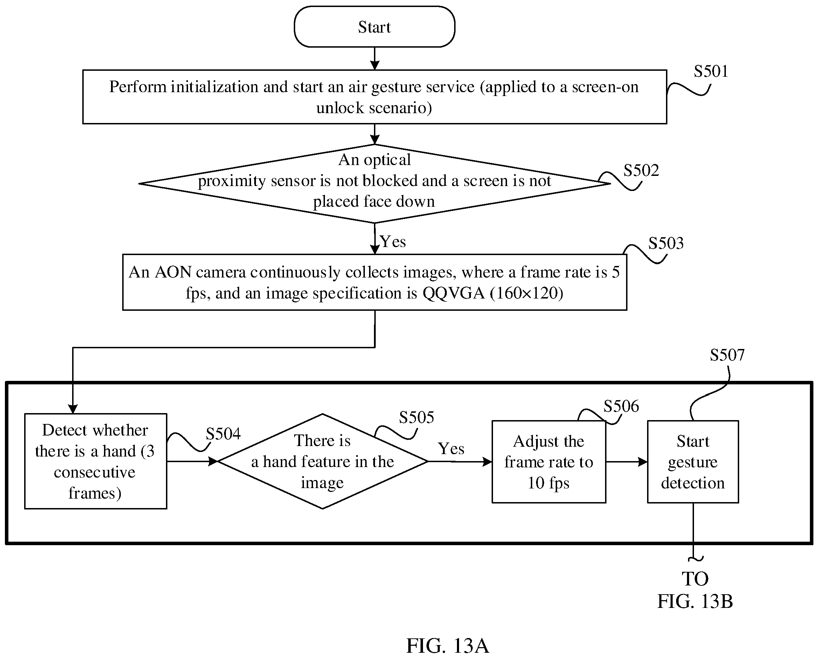

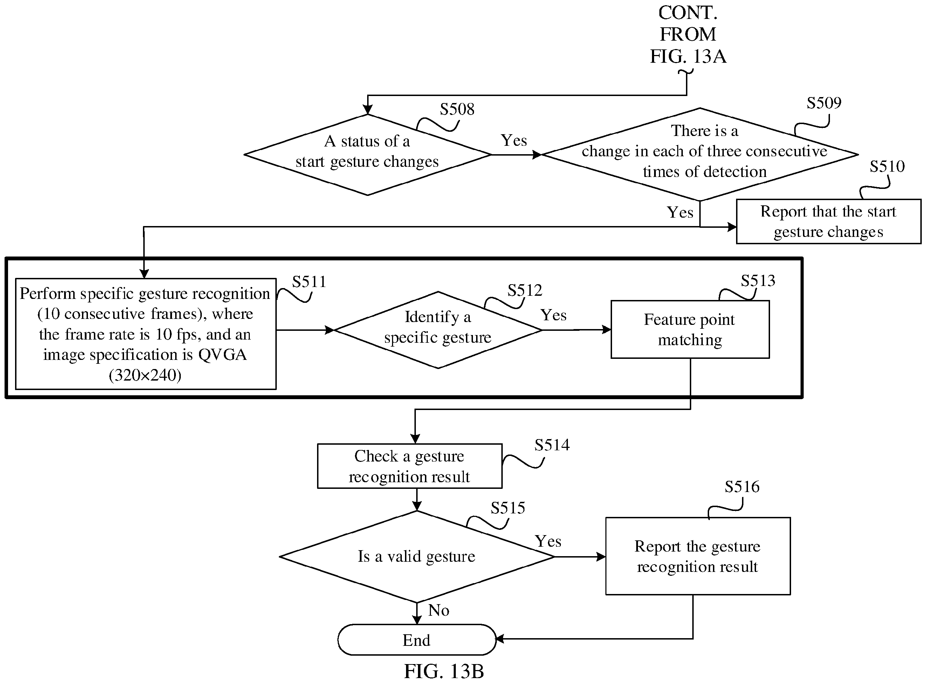

With reference to a flowchart shown in FIG. 13A and FIG. 13B, the following further describes the air gesture recognition method provided in the embodiments of this application.

S501: A system is initialized and starts an air gesture service.

The user may turn on a switch of an air gesture in a system application to trigger to enable an air gesture function, that is, start the air gesture service.

It should be noted that the air gesture service is applied to a screen-on unlock scenario. After it is detected that a screen-on unlock condition is met, it is determined whether two conditions in S502 are met.

S502: Determine whether the optical proximity sensor is not blocked and whether the screen is not placed face down.

For a determining manner of the foregoing S502, refer to a determining manner of the foregoing S403. Details are not described herein again.

If it is determined that the optical proximity sensor is not blocked and the screen is not placed face down, the following S503-S505 continue to be performed. To be specific, it starts to detect whether there is a hand, and the AON camera outputs an image at an extremely low frame rate (for example, 2 fps~5 fps).

S503: The AON camera continuously collects images, where a frame rate is 5 fps, and an image specification is QQVGA (160×120).

It should be noted that the frame rate 5 fps is an example. In actual implementation, another possible frame rate may be used, for example, the frame rate is 30 fps.

S504: Detect whether there is a hand.

For example, three consecutive frames of images are obtained each time, and the three consecutive frames of images are analyzed. That is, whether there is a hand is detected once every three frames of images. It should be noted that, an example in which whether there is a hand is detected once for three consecutive frames is used for description. In actual implementation, a quantity of frames may alternatively be another possible value.

S505: Determine whether there is a hand feature in the image.

Whether there is the hand feature in the image is determined by detecting whether there is a hand.

S506: When it is determined that there is the hand feature in the image, adjust the frame rate to 10 fps.

It should be noted that the frame rate 10 fps is an example. In actual implementation, another possible frame rate may be used.

S507: Perform start gesture detection.

If it is detected that there is the hand feature, an image output frame rate of the AON camera is increased to 10 fps, and it is determined whether the hand feature meets a start gesture. In some embodiments, detection is stopped if the start gesture is not identified for 2 consecutive seconds. For example, the start gesture is a palm open state or another possible gesture state.

For example, three consecutive frames of images are analyzed to complete the start gesture detection once.

S508: Determine whether a status of a start gesture changes.

For example, the status of the start gesture changes from the palm open state to a grab state, or the another possible gesture state changes.

S509: When it is determined that the status of the start gesture changes, determine whether start gesture detection in three consecutive times changes.

It should be noted that an example in which the start gesture detection is performed for three consecutive times is used for description. In actual implementation, a quantity of detection times may alternatively be another possible value.

S510: When it is determined that the start gesture changes in each of the three consecutive times of start gesture detection, report that the start gesture changes.

After it reports that the start gesture changes to the smart sensing application, prompt information corresponding to the air gesture service may be displayed on the screen, for example, an image of a dynamically changing user gesture.

S511: When it is determined that the start gesture changes in each of the three consecutive times of start gesture detection, perform specific gesture recognition, where the frame rate is 10 fps, and an image specification is QVGA (320×240).

For example, 10 consecutive frames of images are obtained each time, and the 10 consecutive frames of images are analyzed. That is, the specific gesture recognition is performed once every 10 frames of images. It should be noted that, an example in which the specific gesture recognition is performed once for 10 consecutive frames is used for description. In actual implementation, a quantity of frames may alternatively be another possible value. It should be further noted that the frame rate 10 fps is an example. In actual implementation, another possible frame rate may be used.

S512: Whether a specific gesture is identified.

In some embodiments, detection is stopped if the specific gesture is not identified for 2 consecutive seconds.

S513: When the specific gesture is identified, perform feature point matching.

S514: Check a gesture recognition result.

S515: Determine whether the gesture recognition result is a valid gesture.

S516: When it is determined that the gesture recognition result is the valid gesture, report the gesture recognition result to the smart sensing application.

Then, the smart sensing application responds based on a preset policy corresponding to the gesture recognition result.

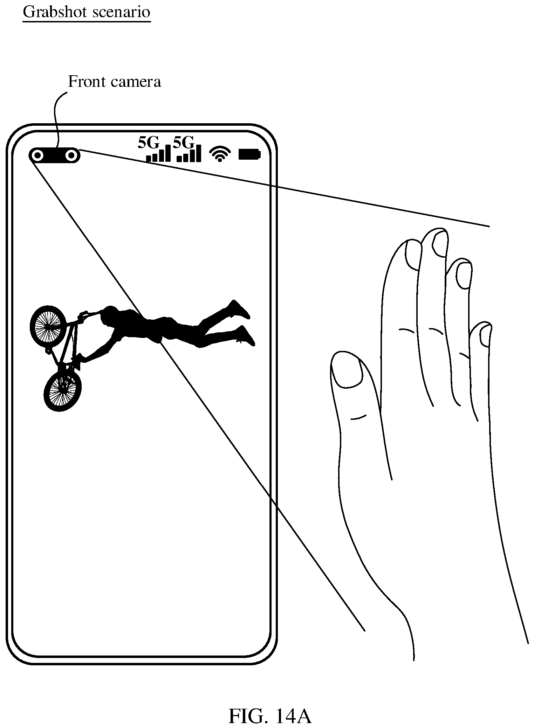

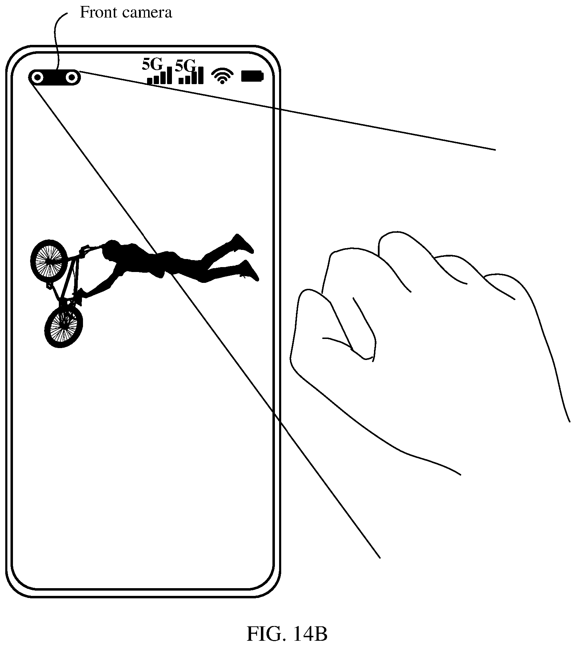

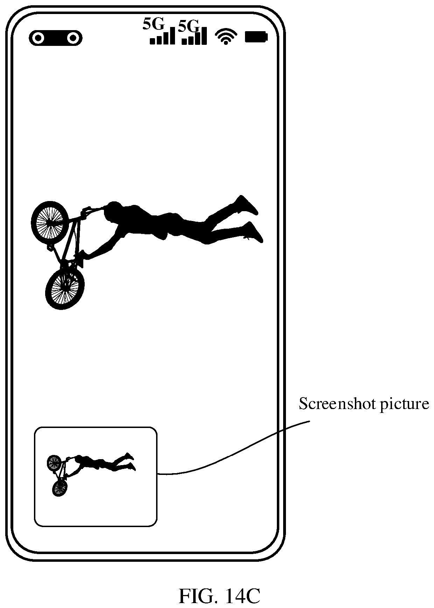

For example, if the gesture recognition result is a grab gesture, a corresponding preset policy is to take a screenshot, that is, to take a screenshot of a current interface. FIG. 14A to FIG. 14C are a schematic diagram of an interface of a grabshot scenario applied to an embodiment of this application.

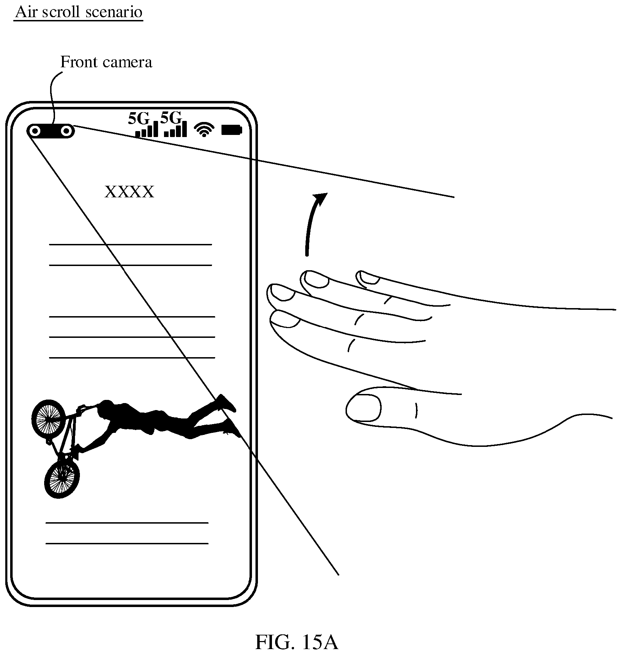

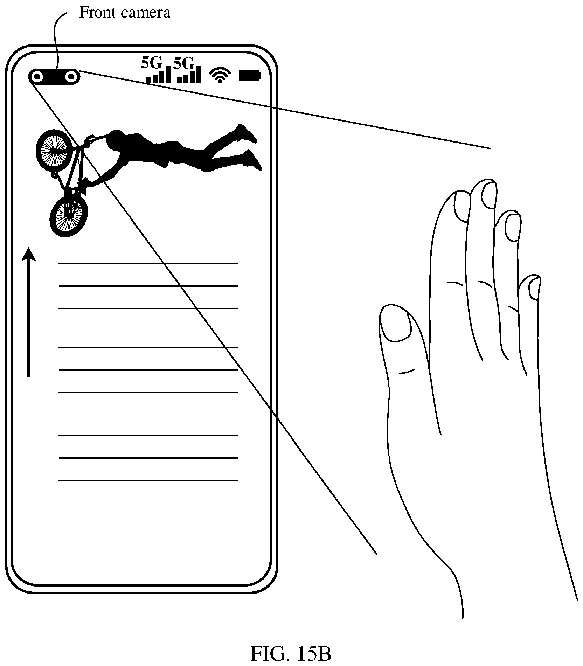

For example, if the gesture recognition result is an air scroll gesture, a corresponding preset policy is to slide the screen or to turn a page. FIG. 15A and FIG. 15B are a schematic diagram of an interface of an air scroll scenario applied to an embodiment of this application.

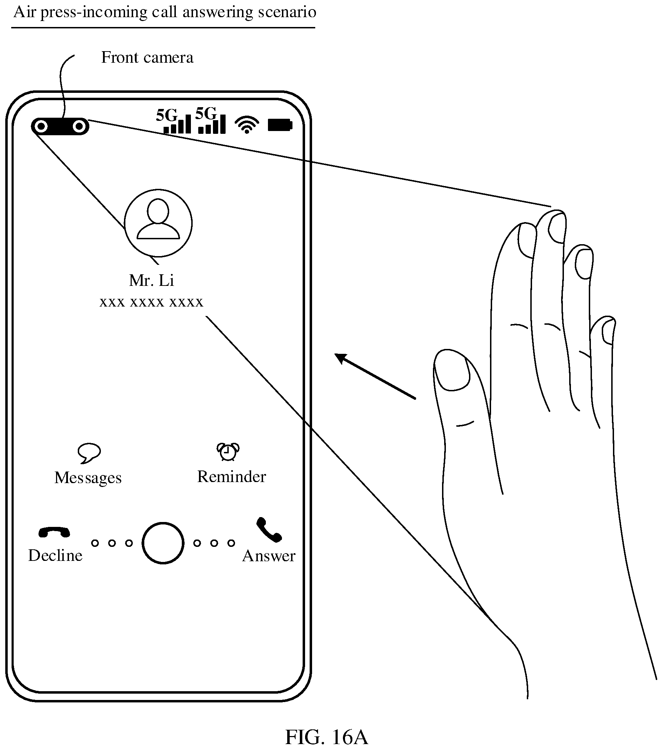

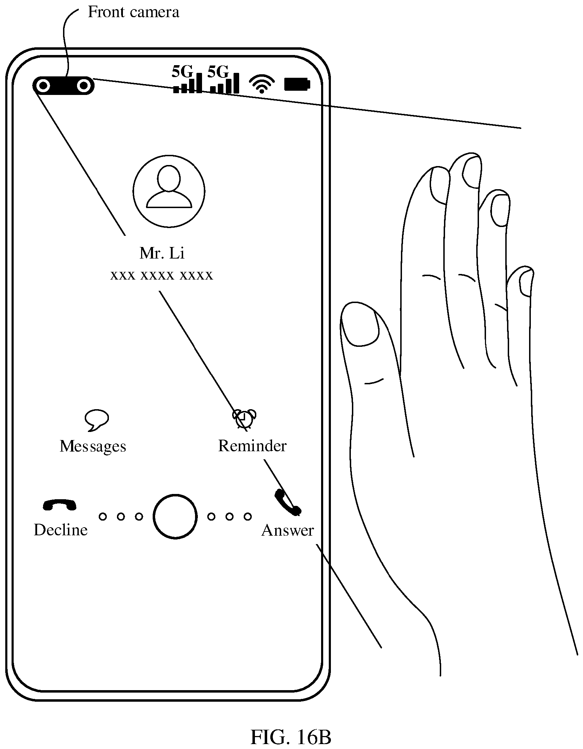

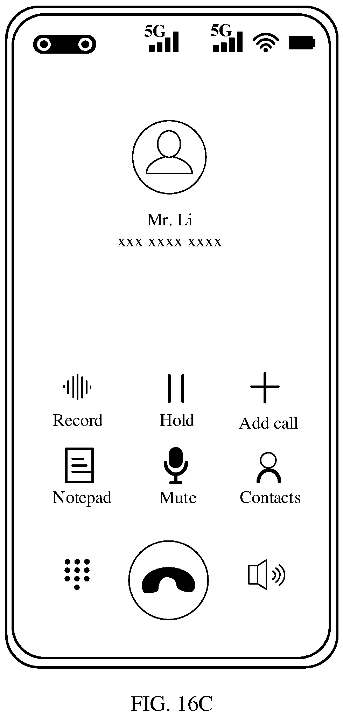

For example, if the gesture recognition result is an air press gesture, a corresponding preset policy is: When an incoming call signal is received, incoming call answering is determined by using the air press gesture. FIG. 16A to FIG. 16C are a schematic diagram of an interface of an air press-incoming call answering scenario applied to an embodiment of this application.

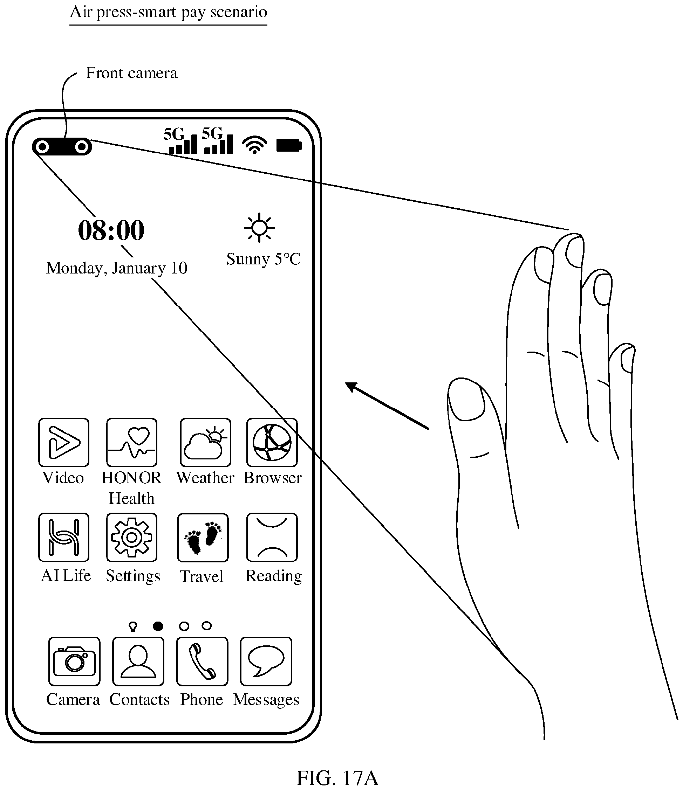

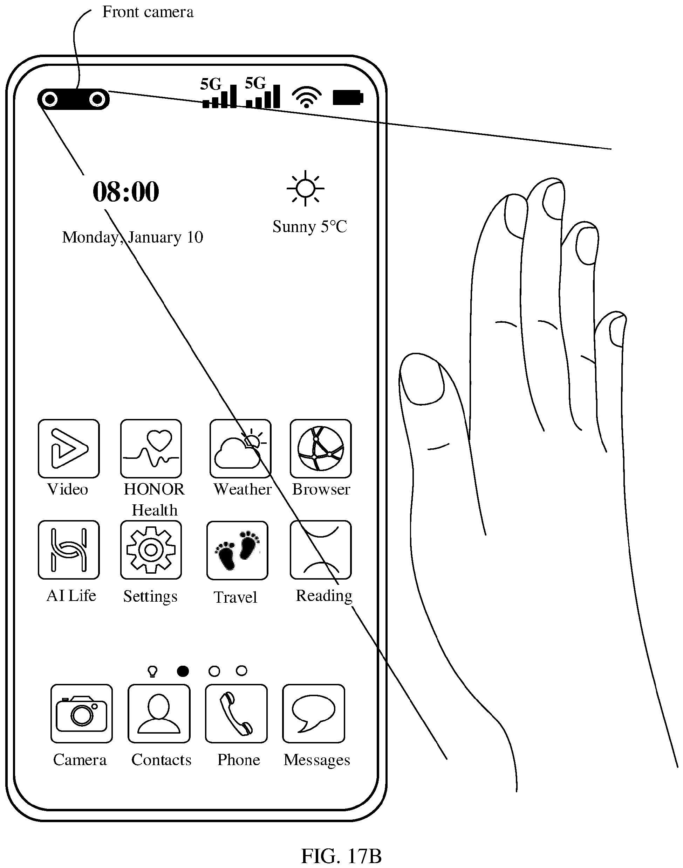

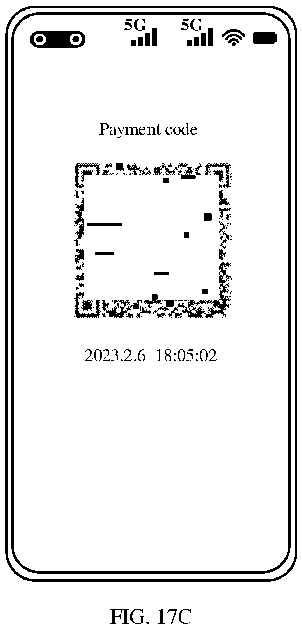

For example, if the gesture recognition result is an air press gesture, a corresponding preset policy is: When the electronic device displays the home screen, a quick jump to a payment code interface is triggered by using the air press gesture. FIG. 17A to FIG. 17C are a schematic diagram of an interface of an air press-smart pay scenario applied to an embodiment of this application.

In this embodiment of this application, a detection threshold is set to implement timeout detection. If no hand feature is detected or no specific gesture is identified within continuous time, frame output detection is stopped, to reduce power consumption.

In this embodiment of this application, in the screen-on scenario, the triggered service is allocated to the newly-added smart sensing algorithm platform, and the newly-added smart sensing algorithm platform performs image analysis to obtain the gesture recognition result. Further, a response may be made based on the preset policy corresponding to the gesture recognition result. Therefore, according to the air gesture recognition method provided in the embodiments of this application, the user gesture can be identified more accurately and with lower power consumption, improving use experience of the user.

Table 1 below shows all power consumption and total power consumption when the solution of this application is applied to different services or features. As shown in Table 1, it is assumed that an image output resolution is 320×240, a frame rate is 10, and total power consumption of an air gesture scenario is 19.03 milliamps (mA). However, when a related technology is used, total power consumption of the air gesture scenario is approximately 100 mA. It may be learned that, when the solution of this application is applied to a gesture recognition feature, power consumption is relatively low, and a low-power gesture recognition service is implemented.

**Table 1**

| Algorithm/Feature | Image output resolution | Frame rate (fps) | Component power consumption (mA) | Channel power consumption (mA) | Algorithm power consumption (mA) | Total power consumption (mA) |
|---|---|---|---|---|---|---|
| Air gesture | 320×240 | 10 | 5.03 | 8 | 6 | 19.03 |

In this embodiment of this application, after the air gesture function is enabled, and after it is identified, in the screen-on scenario, that a preset gesture trigger condition is met, if a capability of querying the gesture recognition service of the platform is enabled, a smart sensing service is accessed to load a configuration, an integrated framework of the AON camera is accessed to request the platform to output an image frame of a specific image specification, and then gesture recognition is performed by using a preset gesture algorithm. It should be noted that functions such as continuous frame output of the AON camera, a gesture algorithm, and detection result reporting are integrated in a sensor hub (SensorHub), and run in a low-power mode, thereby implementing a low power effect of the entire system. During algorithm model training, when accuracy is ensured, QQVGA (160*120) is first selected to detect whether there is the hand feature and the start gesture. Then, when it is detected that there is the hand feature and the start gesture, QVGA (320*240) is used to identify the specific gesture.

After the air gesture service is enabled, the SensorHub starts to collect sensor (Sensor) data, and determines, by using the data collection module such as the ambient light sensor and the optical proximity sensor, whether a current condition meets conditions that the optical proximity sensor is not blocked and the screen is not placed face down, or the like. This is to meet a minimum frame rate and a minimum image resolution that are required by a current service, to subscribe to the air gesture service. The plurality of consecutive frames of images are obtained from the platform, and a detection result of a current frame is obtained through detection by using the gesture recognition algorithm.

In the first phase, running is performed in the low-power mode on a SensorHub side by using the TCM memory, the image specification is QQVGA, and the frame rate is 10 fps, which is mainly used to detect whether there is a hand and used for the start gesture detection.

In the second phase, a specific policy is that detection is continuously performed by an algorithm integration channel for 500 ms. If it is met in this period that a gesture is detected in each of N consecutive frames of data, switching is performed to a normal-power mode on the SensorHub side, running is performed by using the TCM + DDR memory, the image specification is QVGA, and the frame rate is 10 fps, which is mainly used for the specific gesture detection. If detection time of continuous frame output exceeds 500 ms and a condition that a gesture is detected in each of 3 consecutive frames of data is not met, frame output is stopped and a result that no gesture is detected is reported.

It should be noted that in the embodiments of this application, "greater than" may be replaced with "greater than or equal to", and "less than or equal to" may be replaced with "less than"; or "greater than or equal to" may be replaced with "greater than", and "less than" may be replaced with "less than or equal to".

The embodiments described in this specification may be independent solutions, or may be combined based on internal logic. These solutions all fall within the protection scope of this application.

The solutions provided in the embodiments of this application are mainly described above from a perspective of a method step. It may be understood that, to implement the foregoing functions, the electronic device implementing the method includes corresponding hardware structures and/or software modules for performing the functions. A person skilled in the art may be aware that the example units and algorithm steps described with reference to the embodiments disclosed in this specification can be implemented in this application by using hardware or a combination of hardware and computer software. Whether a function is performed by hardware or by driving hardware by using computer software depends on particular applications and design constraints of the technical solutions. A skilled person may use different methods to implement the described functions for each particular application, but it should not be considered that the implementation goes beyond the protection scope of this application.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

An embodiment further provides a computer-readable storage medium. The computer-readable storage medium stores computer instructions. When the computer instructions are run on an electronic device, the electronic device is enabled to perform the foregoing related method steps to implement the air gesture recognition method in the foregoing embodiments.

An embodiment further provides a computer program product. The computer program medium stores program code. When the computer program product runs on a computer, the computer is enabled to perform the foregoing related steps to implement the air gesture recognition method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the air gesture recognition method in the foregoing method embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

In the several embodiments provided in this application, it should be understood that the disclosed apparatus and method may be implemented in other manners. For example, the described apparatus embodiment is merely an example. For example, the module or unit division is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The foregoing descriptions are merely specific implementations of this application, and are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An air gesture recognition method, comprising:
enabling, by an electronic device, an air gesture function, wherein after the air gesture function is enabled, a camera module of the electronic device is in an always-on state;
outputting a plurality of frames of first images of a first size specification by using the camera module, and storing the plurality of frames of first images in a first internal memory;
when an analysis result of the plurality of frames of first images meets a preset gesture trigger condition, outputting a plurality of frames of second images of a second size specification by using the camera module, and storing the plurality of frames of second images in the first internal memory and a second internal memory;
performing gesture recognition based on the plurality of frames of second images, to obtain a gesture recognition result; and
responding based on a preset policy corresponding to the gesture recognition result, wherein
a resolution corresponding to the first size specification is lower than a resolution corresponding to the second size specification; and in a case in which a same image is stored, power consumption caused by the first internal memory is lower than power consumption caused by the second internal memory, and power consumption caused by the first internal memory and the second internal memory together is lower than the power consumption caused by the second internal memory.

2. The method according to claim 1, wherein the method further comprises: determining that the analysis result of the plurality of frames of first images meets the preset gesture trigger condition; and
the determining that the analysis result of the plurality of frames of first images meets the preset gesture trigger condition comprises:
obtaining N consecutive frames of images from the plurality of frames of first images based on a preset first sampling period, to analyze whether there is a hand feature in the plurality of frames of first images;
after it is determined that there is the hand feature in the plurality of frames of first images, obtaining M consecutive frames of images from the plurality of frames of first images based on a preset second sampling period, to analyze whether there is a start gesture in the plurality of frames of first images; and
if it is determined, for S consecutive times, that there is the start gesture in the plurality of frames of first images and a status of the start gesture changes, determining that the analysis result of the plurality of frames of first images meets the preset gesture trigger condition.

3. The method according to claim 1 or 2, wherein the performing gesture recognition based on the plurality of frames of second images, to obtain a gesture recognition result comprises:
obtaining T consecutive frames of images from the plurality of frames of second images based on a preset third sampling period, to identify a specific gesture in the plurality of frames of first images;
identifying the specific gesture within preset duration; and
when it is determined that the specific gesture is one of a plurality of preset gestures, generating the gesture recognition result based on the specific gesture.

4. The method according to any one of claims 1 to 3, wherein the responding based on a preset policy corresponding to the gesture recognition result comprises:
when the gesture recognition result is a first gesture and a corresponding first preset policy is grabshot, taking a screenshot of screen display content of the electronic device based on the first preset policy;
when the gesture recognition result is a second gesture and a corresponding second preset policy is air scroll, turning a page of screen display content of the electronic device based on the second preset policy;
when the gesture recognition result is a third gesture and a corresponding third preset policy is air answer calls, and when the electronic device receives an incoming call signal, automatically answering an incoming call based on the third preset policy; or
when the gesture recognition result is a fourth gesture and a corresponding fourth preset policy is air pay, and when a home screen is displayed on a screen of the electronic device, automatically jumping from the home screen to an interface comprising a payment code based on the fourth preset policy.

5. The method according to any one of claims 1 to 4, wherein the first internal memory is a tightly coupled memory TCM and the second internal memory is a double data rate DDR synchronous dynamic random access memory.

6. The method according to any one of claims 1 to 5, wherein
the second size specification is QVGA, and a corresponding resolution is 320×240; and
the first size specification is QQVGA, and a corresponding resolution is 160×120.

7. The method according to any one of claims 1 to 6, wherein the camera module is a front camera.

8. The method according to any one of claims 1 to 7, wherein the method is applied to a system framework of the electronic device, and the system framework comprises a first algorithm platform and a second algorithm platform; and
the second algorithm platform is a framework that is provided by a native chip and that supports an always-on camera AON algorithm; the first algorithm platform is an AON algorithm integration framework that supports a plurality of services and that is created based on the second algorithm platform; a service supported by the first algorithm platform for processing comprises an air gesture service; and a service supported by the second algorithm platform for processing comprises a face unlock screen service.

9. The method according to claim 8, wherein the method further comprises:
analyzing the plurality of frames of first images by using the first algorithm platform; and
determining, by using the first algorithm platform, whether the analysis result of the plurality of frames of first images meets the preset gesture trigger condition.

10. The method according to claim 8 or 9, wherein the performing gesture recognition based on the plurality of frames of second images, to obtain a gesture recognition result comprises:
performing the gesture recognition based on the plurality of frames of second images by using the first algorithm platform, to obtain the gesture recognition result.

11. The method according to any one of claims 8 to 10, wherein the system framework further comprises a smart sensing application;
the enabling, by an electronic device, an air gesture function comprises:
receiving, by the smart sensing application, a first operation of enabling the air gesture service by a user, wherein the air gesture service is a service supported by the smart sensing application;
delivering, by the smart sensing application, a first message to the first algorithm platform in response to the first operation, wherein the first message is used to indicate to subscribe to the air gesture service; and
subscribing, by the first algorithm platform, to the air gesture service in response to the first message.

12. The method according to claim 11, wherein after the subscribing to the air gesture service, the method further comprises:
sending, by the first algorithm platform, a second message to the camera module, wherein the second message is used to request the camera module to output an image based on the first size specification.

13. The method according to claim 11 or 12, wherein the method further comprises:
after the first algorithm platform determines that the analysis result of the plurality of frames of first images meets the preset gesture trigger condition, sending, by the first algorithm platform, a third message to the camera module, wherein the third message is used to request the camera module to output an image based on the second size specification.

14. The method according to any one of claims 11 to 13, wherein the method further comprises:
after the first algorithm platform determines that the analysis result of the plurality of frames of first images meets the preset gesture trigger condition, reporting, by the first algorithm platform, a fourth message to the smart sensing application, wherein the fourth message is used to indicate that a first service supported by the smart sensing application is triggered; and
triggering, by the smart sensing application in response to the fourth message, the electronic device to display prompt information of the first service in a preset area of the screen.

15. The method according to claim 14, wherein the prompt information of the first service comprises a gesture animation, and the gesture animation comprises the plurality of frames of first images and the plurality of frames of second images.

16. The method according to any one of claims 11 to 15, wherein before the responding based on a preset policy corresponding to the gesture recognition result, the method further comprises:
reporting, by the first algorithm platform, the gesture recognition result to the smart sensing application; and
the responding based on a preset policy corresponding to the gesture recognition result comprises:
responding, by the smart sensing application, based on the preset policy corresponding to the gesture recognition result.

17. The method according to any one of claims 11 to 16, wherein the system framework further comprises a smart sensing interface; and
data exchange is performed between the smart sensing application and the first algorithm platform by using the smart sensing interface.

18. The method according to any one of claims 8 to 17, wherein the system framework further comprises a service management module, a dispatcher, a smart sensing client, and a native platform client; and the method further comprises:
when the analysis result of the plurality of frames of first images meets the preset gesture trigger condition, determining, by the service management module, a processing task of the air gesture service, and sending the processing task of the air gesture service to the smart sensing client by using the dispatcher, and forwarding, by the smart sensing client, the processing task of the air gesture service to the first algorithm platform.

19. The method according to any one of claims 8 to 18, wherein the system framework further comprises an algorithm library, wherein the algorithm library comprises a first image processing algorithm and a second image processing algorithm; and
the analyzing the plurality of frames of first images by using the first algorithm platform comprises: invoking, by the first algorithm platform, the first image processing algorithm in the algorithm library to perform image analysis on the plurality of frames of first images; and
the performing gesture recognition based on the plurality of frames of second images comprises: invoking, by the first algorithm platform, the second image processing algorithm in the algorithm library to perform image analysis on the plurality of frames of second images, wherein
a requirement of the first image processing algorithm on an image resolution is lower than a requirement of the second image processing algorithm on an image resolution.

20. An air gesture recognition method, comprising:
enabling, by an electronic device, an air gesture function, wherein after the air gesture function is enabled, a camera module of the electronic device is in an always-on state;
outputting a plurality of frames of first images of a first size specification by using the camera module, and storing the plurality of frames of first images in a first internal memory;
when an analysis result of the plurality of frames of first images meets a preset dynamic gesture trigger condition, outputting a plurality of frames of second images of a second size specification by using the camera module, and storing the plurality of frames of second images in the first internal memory and a second internal memory, wherein the preset dynamic gesture trigger condition comprises that there is a hand feature and a start gesture in the plurality of frames of first images and a status of the start gesture changes;
performing dynamic gesture recognition based on the plurality of frames of second images, to obtain a dynamic gesture recognition result; and
responding based on a preset policy corresponding to the dynamic gesture recognition result, wherein
a resolution corresponding to the first size specification is lower than a resolution corresponding to the second size specification; the plurality of frames of first images and the plurality of frames of second images are same frames of images; and in a case in which a same image is stored, power consumption caused by the first internal memory is lower than power consumption caused by the second internal memory, and power consumption caused by the first internal memory and the second internal memory together is lower than the power consumption caused by the second internal memory.

21. The method according to claim 20, wherein the method further comprises: determining that the analysis result of the plurality of frames of first images meets the preset dynamic gesture trigger condition; and
the determining that the analysis result of the plurality of frames of first images meets the preset dynamic gesture trigger condition comprises:
obtaining N consecutive frames of images from the plurality of frames of first images based on a preset first sampling period, to analyze whether there is the hand feature in the plurality of frames of first images;
after it is determined that there is the hand feature in the plurality of frames of first images, obtaining M consecutive frames of images from the plurality of frames of first images based on a preset second sampling period, to analyze whether there is the start gesture in the plurality of frames of first images; and
if it is determined, for S consecutive times, that there is the start gesture in the plurality of frames of first images and the status of the start gesture changes, determining that the analysis result of the plurality of frames of first images meets the preset dynamic gesture trigger condition.

22. The method according to claim 20 or 21, wherein the performing dynamic gesture recognition based on the plurality of frames of second images, to obtain a dynamic gesture recognition result comprises:
obtaining T consecutive frames of images from the plurality of frames of second images based on a preset third sampling period, to identify a specific dynamic gesture in the plurality of frames of first images;
identifying the specific dynamic gesture within preset duration; and
when it is determined that the specific dynamic gesture is one of a plurality of preset dynamic gestures, generating the dynamic gesture recognition result based on the specific gesture.

23. The method according to claim 20, wherein the responding based on a preset policy corresponding to the dynamic gesture recognition result comprises:
when the dynamic gesture recognition result is a first gesture and a corresponding first preset policy is grabshot, taking a screenshot of screen display content of the electronic device based on the first preset policy;
when the dynamic gesture recognition result is a second gesture and a corresponding second preset policy is air scroll, turning a page of screen display content of the electronic device based on the second preset policy;
when the dynamic gesture recognition result is a third gesture and a corresponding third preset policy is air answer calls, and when the electronic device receives an incoming call signal, automatically answering an incoming call based on the third preset policy; or
when the dynamic gesture recognition result is a fourth gesture and a corresponding fourth preset policy is air pay, and when a home screen is displayed on a screen of the electronic device, automatically jumping from the home screen to an interface comprising a payment code based on the fourth preset policy.

24. The method according to claim 20, wherein the first internal memory is a tightly coupled memory TCM and the second internal memory is a double data rate DDR synchronous dynamic random access memory.

25. An electronic device, comprising a processor, a memory, and a computer program stored in the memory, wherein the processor is configured to execute the computer program, to enable the electronic device to implement the method according to any one of claims 1 to 24.

26. A computer-readable storage medium, wherein the computer-readable storage medium stores a computer program, and when the computer program runs on an electronic device, the electronic device is enabled to perform the method according to any one of claims 1 to 24.

27. A computer program product, wherein the computer program product comprises computer program code, and when the computer program code is run by an electronic device, the electronic device is enabled to perform the method according to any one of claims 1 to 24.
